# EUROPEAN PATENT APPLICATION

(11) **EP 4 738 170 A2**
(43) Date of publication of application: **06.05.2026**
(21) Application number: 26166571.5
(22) Date of filing: 16.03.2022
(51) Int. Cl.: G06F 21/62

(54) **APPARATUS AND METHOD OF COORDINATING REGISTRATION PROCEDURES FOR ACCESS TO UNCREWED AERIAL SERVICES**

(30) Priority: 30.03.2021 US 202163168227 P; 01.04.2021 US 202163169821 P
(62) Divisional of application: 22781863.0
(71) Applicant: Innopeak Technology, Inc., Palo Alto, CA 94303 (US)
(72) Inventor: SO, Tricci, Palo Alto, 94303 (US)
(74) Representative: Mewburn Ellis LLP

(57) **Abstract**

According to one aspect of the present disclosure, a method of wireless communication of a network element is provided. The method may include initiating a network slice specific authentication and authorization (NSSAA) procedure to register a user equipment (UE) with a network slice associated with uncrewed aerial services. In response to successful registration of the UE with the network slice by the NSSAA procedure, the method may include initiating an uncrewed aerial system (UAS) service supplier (USS) uncrewed aerial vehicle (UAV) authentication and authorization (UUAA) mobility management (UUAA-MM) procedure to register the UE with a USS associated with the network slice. In some embodiments, the USS may maintain the uncrewed aerial services.

## Description

### TECHNICAL FIELD

Embodiments of the present disclosure relate to apparatus and method for wireless communication.

### BACKGROUND

Wireless communication systems are widely deployed to provide various telecommunication services such as telephony, video, data, messaging, and broadcasts. In cellular communication, such as the 4th-generation (4G) Long Term Evolution (LTE) and the 5th-generation (5G) New Radio (NR), the 3rd Generation Partnership Project (3GPP) defines various mechanisms for registering a user equipment (UE) for access to various subscription-based services.

### SUMMARY

According to one aspect of the present disclosure, a method of wireless communication of a network element is provided. The method may include initiating a network slice specific authentication and authorization (NSSAA) procedure to register a user equipment (UE) with a network slice associated with uncrewed aerial services. In response to successful registration of the UE with the network slice by the NSSAA procedure, the method may include initiating an uncrewed aerial system (UAS) service supplier (USS) uncrewed aerial vehicle (UAV) authentication and authorization (UUAA) mobility management (UUAA-MM) procedure to register the UE with a USS associated with the network slice. In some embodiments, the USS may maintain the uncrewed aerial services.

According to another aspect of the present disclosure, an apparatus for wireless communication of a network element is provided. The apparatus may include a memory and at least one processor coupled to the memory. The at least one processor may be configured to initiate an NSSAA procedure to register a UE with a network slice associated with uncrewed aerial services. In response to successful registration of the UE with the network slice by the NSSAA procedure, the at least one processor may be configured to initiate a UUAA-MM procedure to register the UE with a USS associated with the network slice. In some embodiments, the USS may maintain the uncrewed aerial services.

According to still another aspect of the present disclosure, a non-transitory computer-readable medium encoding instructions that, when executed by at least one processor, perform a process for wireless communication of a network element, is provided. The process may include initiating an NSSAA procedure to register a UE with a network slice associated with uncrewed aerial services. In response to successful registration of the UE with the network slice by the NSSAA procedure, the process may include initiating a UUAA-MM procedure to register the UE with a USS associated with the network slice.

According to yet another aspect of the present disclosure, a method of wireless communication of a UE is provided. The method may include sending, to a network element, a registration request to register with an access network. The registration request may indicate support for an NSSAA procedure. The method may include performing a primary authentication procedure to register with the access network. In response to successful registration with the access network by the primary authentication procedure, the method may include performing the NSSAA procedure to register with a network slice that supports uncrewed aerial services. In response to registering with the network slice by the NSSAA procedure, the method may include performing a UUAA-MM procedure to register with a USS associated with the network slice.

According to a further aspect of the present disclosure, an apparatus for wireless communication of a UE is provided. The apparatus may include a memory and at least one processor coupled to the memory. The at least one processor may be configured to send, to a network element, a registration request to register with an access network, the registration request indicating support for an NSSAA procedure. The at least one processor may be configured to perform a primary authentication procedure to register with the access network. In response to successful registration with the access network by the primary authentication procedure, the at least one processor may be configured to perform the NSSAA procedure to register with a network slice that supports uncrewed aerial services. In response to registering with the network slice by the NSSAA procedure, the at least one processor may be configured to perform a UUAA-MM procedure to register with a USS associated with the network slice.

According to yet a further aspect of the present disclosure, a non-transitory computer-readable medium encoding instructions that, when executed by at least one processor, perform a process for wireless communication of a UE. The process may include sending, to a network element, a registration request to register with an access network. The registration request indicating support for an NSSAA procedure. The process may include performing a primary authentication procedure to register with the access network. In response to successful registration with the access network by the primary authentication procedure, the process may include performing the NSSAA procedure to register with a network slice that supports uncrewed aerial services. In response to registering with the network slice by the NSSAA procedure, the process may include performing a UUAA-MM procedure to register with a USS associated with the network slice.

These illustrative embodiments are mentioned not to limit or define the present disclosure, but to provide examples to aid understanding thereof. Additional embodiments are discussed in the Detailed Description, and further description is provided there.

### BRIEF DESCRIPTION OF THE DRAWINGS

The accompanying drawings, which are incorporated herein and form a part of the specification, illustrate embodiments of the present disclosure and, together with the description, further serve to explain the principles of the present disclosure and to enable a person skilled in the pertinent art to make and use the present disclosure.
FIG. 1 illustrates an exemplary wireless network, according to some embodiments of the present disclosure.
FIG. 2 illustrates a block diagram of an exemplary node, according to some embodiments of the present disclosure.
FIG. 3A illustrates an exemplary service-based wireless communication system architecture, according to some embodiments of the present disclosure.
FIG. 3B illustrates an exemplary wireless communication system that supports network slicing, according to some embodiments of the present disclosure.
FIG. 4 illustrates a conceptual flow diagram of a first exemplary data flow of an exemplary coordinated registration procedure performed by a user equipment and a set of network elements, according to some embodiments of the present disclosure.
FIGs. 5A and 5B illustrate a conceptual flow diagram of a primary authentication procedure implemented as part of the exemplary coordinated registration procedures of FIG. 4, according to some embodiments of the present disclosure.
FIGs. 6A and 6B illustrate a conceptual flow diagram of an NSSAA procedure implemented as part of the exemplary coordinated registration procedures of FIG. 4, according to some embodiments of the present disclosure.
FIGs. 7A and 7B illustrate a conceptual flow diagram of a UUAA-MM procedure implemented as part of the exemplary coordinated registration procedures of FIG. 4, according to some embodiments of the present disclosure.
FIG. 8 illustrates a flow chart of a first exemplary method of wireless communication, according to some embodiments of the present disclosure.
FIG. 9 illustrates a conceptual data flow diagram depicting the data flow between different components in a first exemplary apparatus.
FIG. 10 is a diagram illustrating an example of a hardware implementation for the first exemplary apparatus of FIG. 9 employing a processing system.
FIG. 11 illustrates a flow chart of a second exemplary method of wireless communication, according to some embodiments of the present disclosure.
FIG. 12 illustrates a conceptual data flow diagram depicting the data flow between different components in a second exemplary apparatus.
FIG. 13 is a diagram illustrating an example of a hardware implementation for the second exemplary apparatus of FIG. 12 employing a processing system.

Embodiments of the present disclosure will be described with reference to the accompanying drawings.

### DETAILED DESCRIPTION

Although some configurations and arrangements are discussed, it should be understood that this is done for illustrative purposes only. A person skilled in the pertinent art will recognize that other configurations and arrangements can be used without departing from the spirit and scope of the present disclosure. It will be apparent to a person skilled in the pertinent art that the present disclosure can also be employed in a variety of other applications.

It is noted that references in the specification to "one embodiment," "an embodiment," "an example embodiment," "some embodiments," "certain embodiments," etc., indicate that the embodiment described may include a particular feature, structure, or characteristic, but every embodiment may not necessarily include the particular feature, structure, or characteristic. Moreover, such phrases do not necessarily refer to the same embodiment. Further, when a particular feature, structure, or characteristic is described in connection with an embodiment, it would be within the knowledge of a person skilled in the pertinent art to effect such feature, structure, or characteristic in connection with other embodiments whether or not explicitly described.

In general, terminology may be understood at least in part from usage in context. For example, the term "one or more" as used herein, depending at least in part upon context, may be used to describe any feature, structure, or characteristic in a singular sense or may be used to describe combinations of features, structures or characteristics in a plural sense. Similarly, terms, such as "a," "an," or "the," again, may be understood to convey a singular usage or to convey a plural usage, depending at least in part upon context. In addition, the term "based on" may be understood as not necessarily intended to convey an exclusive set of factors and may, instead, allow for existence of additional factors not necessarily expressly described, again, depending at least in part on context.

Various aspects of wireless communication systems will now be described with reference to various apparatus and methods. These apparatus and methods will be described in the following detailed description and illustrated in the accompanying drawings by various blocks, modules, units, components, circuits, steps, operations, processes, algorithms, etc. (collectively referred to as "elements"). These elements may be implemented using electronic hardware, firmware, computer software, or any combination thereof. Whether such elements are implemented as hardware, firmware, or software depends upon the particular application and design constraints imposed on the overall system.

The techniques described herein may be used for various wireless communication networks, such as code division multiple access (CDMA) system, time division multiple access (TDMA) system, frequency division multiple access (FDMA) system, orthogonal frequency division multiple access (OFDMA) system, single-carrier frequency division multiple access (SC-FDMA) system, wireless local area network (WLAN) system, and other networks. The terms "network" and "system" are often used interchangeably. A CDMA network may implement a radio access technology (RAT), such as Universal Terrestrial Radio Access (UTRA), evolved UTRA (E-UTRA), CDMA 2000, etc. A TDMA network may implement a RAT, such as the Global System for Mobile Communications (GSM). An OFDMA network may implement a RAT, such as LTE or NR. A WLAN system may implement a RAT, such as Wi-Fi. The techniques described herein may be used for the wireless networks and RATs mentioned above, as well as other wireless networks and RATs.

In 5G NR, a network slice is a logical network customized to serve a defined service class (e.g., business purpose) or customer application. A network slice may include an end-to-end composition of all the varied network resources used to satisfy the performance and economic needs of that particular service class or customer application. Thus, network slicing offers a conceptual way of viewing and realizing service provider networks by building logical networks on top of a common and shared infrastructure layer, such as the 5G NR core network. Network slices may be created, changed, and removed by management and orchestration functions. By way of example, network slicing may be used by a service provider (e.g., Amazon) to establish a virtual service provider network over the infrastructure of a physical network operator (e.g., Verizon) through which a customer may access service provider subscription services.

In some instances, a service provider may provide uncrewed aerial services. The UE of a subscribed user may access those services once the UE has been registered with an access network and a network slice. An uncrewed aerial vehicle (UAV), which may be part of an uncrewed aerial system (UAS), which may also include an uncrewed aerial controller (UAC), is one example of a UE that may access uncrewed aerial services. The service provider may maintain uncrewed aerial services at a UAV service supplier (USS) entity, for example. The UAV may register with the network slice via a Network Slice Specific Authentication and Authorization (NSSAA) procedure before network slice access is granted. The network slice for which the NSSAA procedure is performed may be identified by Single Network Slice Selection Assistance Information (S-NSSAI) included in the UE's registration request, which is triggers a primary authentication procedure to register with an access network, for example. However, before the NSSAA procedure can be initiated, the UAV may have to register with the access network via a primary authentication procedure.

Furthermore, the UAV may also have to register with the USS before the uncrewed aerial services can be accessed via the network slice, in some instances. Registration with the USS may be implemented via an USS UAV authentication and authorization (UUAA) mobility management (MM) (UUAA-MM) procedure, for example.

According to some UAV registration techniques, however, the UAV may initiate the UUAA-MM procedure while the primary authentication procedure is still ongoing, and hence, prior to the completion of the NSSAA procedure. This may occur when a network element determines that the UUAA-MM procedure should be performed based on UUAA information obtained during the primary authentication procedure. Once this determination has been made, the network element may trigger the initiation of the UUAA-MM procedure. In other words, the UUAA-MM procedure may be initiated before the UAV is registered with the network slice via the NSSAA procedure. In such instances, the UUAA-MM procedure may fail because the UAV is not yet registered with the network slice through which access to the USS and its uncrewed aerial services may be gained. Consequently, a network entity that implements such an uncoordinated UAV registration technique wastes power and creates signaling over unnecessarily. Moreover, when the UUAA-MM procedure fails due to a lack of registration with the network slice, the network element may reattempt the UUAA-MM procedure unsuccessfully until the UAV is eventually registered with the network slice by the NSSAA procedure, thereby exacerbating the above-mentioned problems.

Thus, there exists an unmet need to coordinate the various UAV registration procedures to avoid unnecessary UUAA-MM procedure failure.

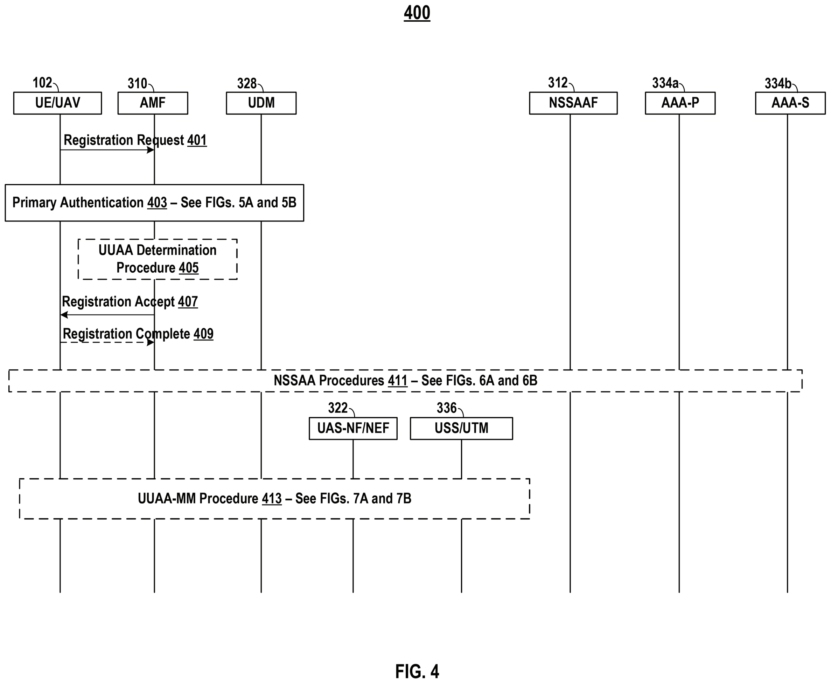

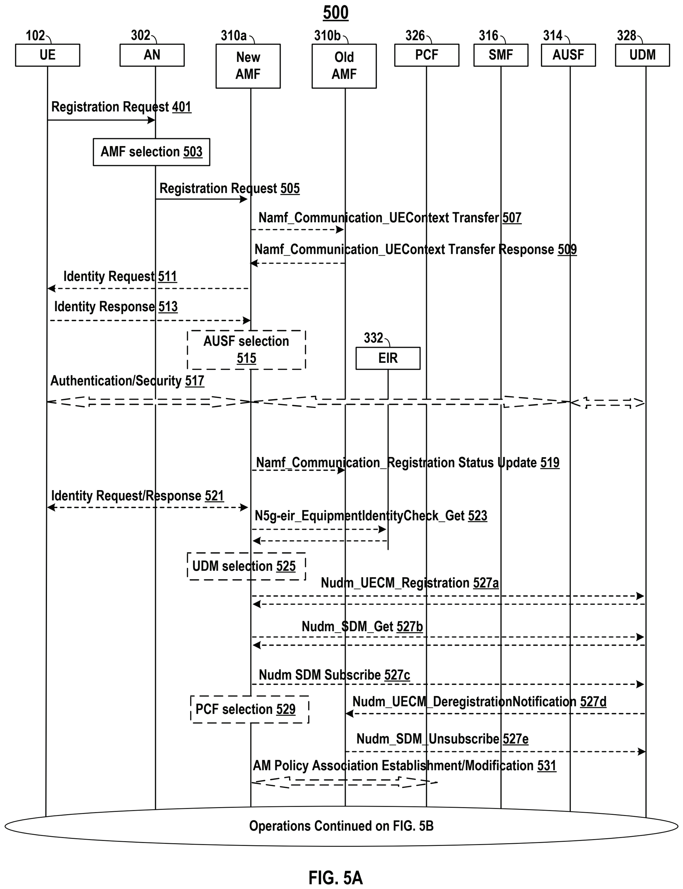

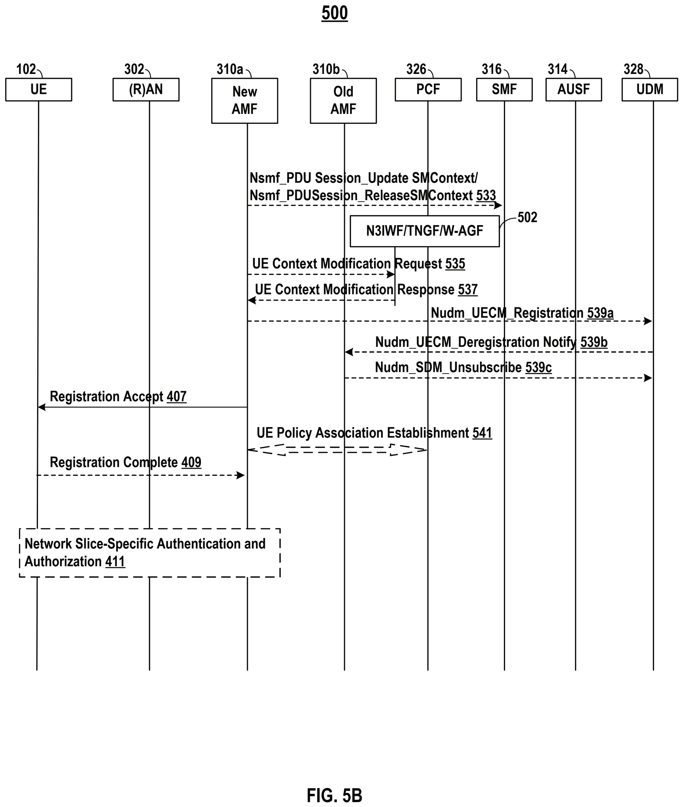

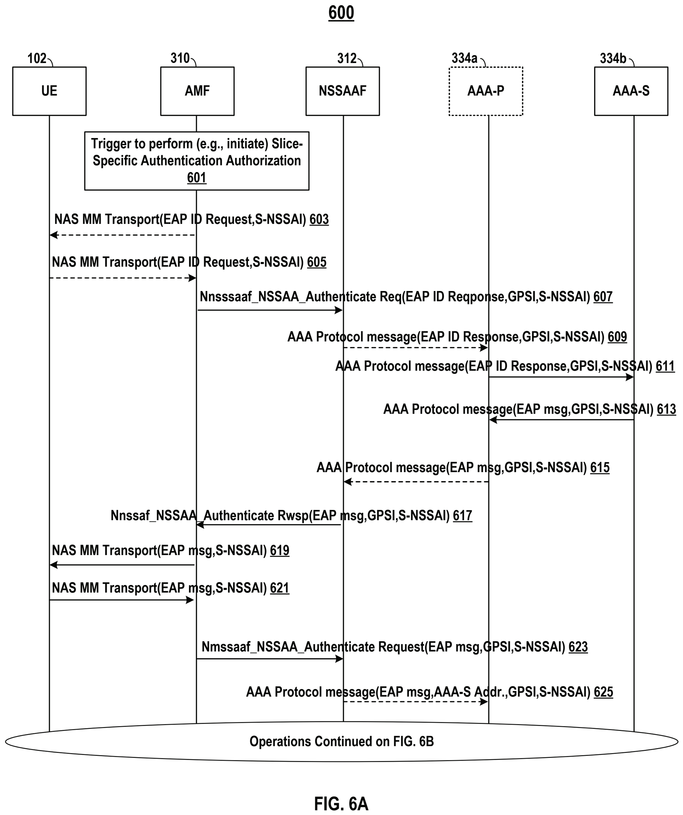

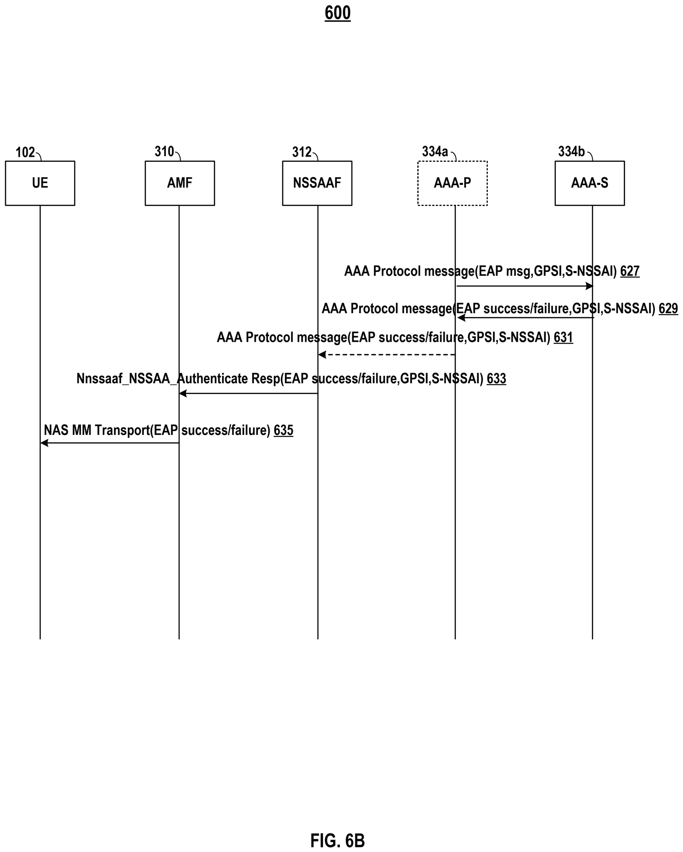

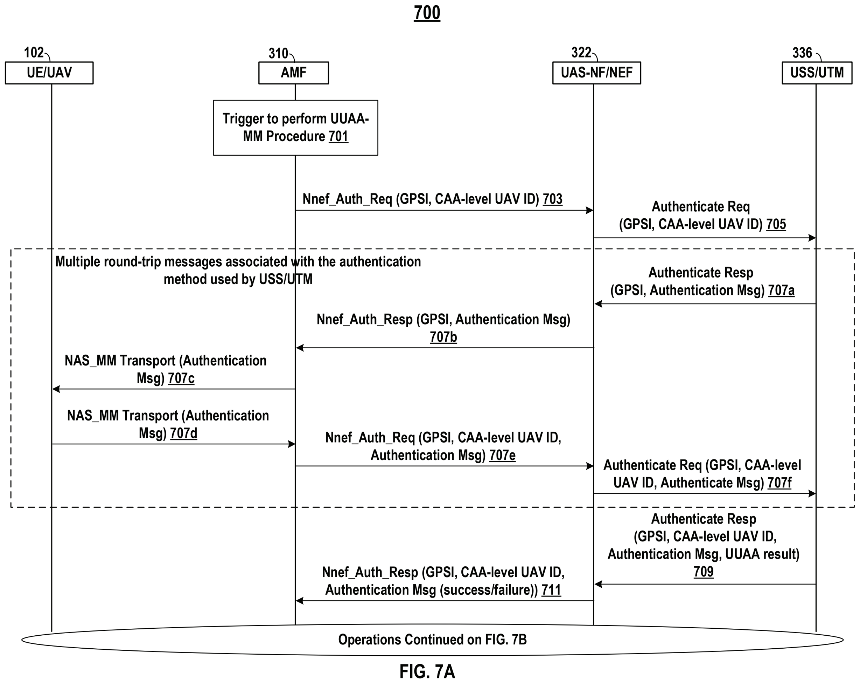

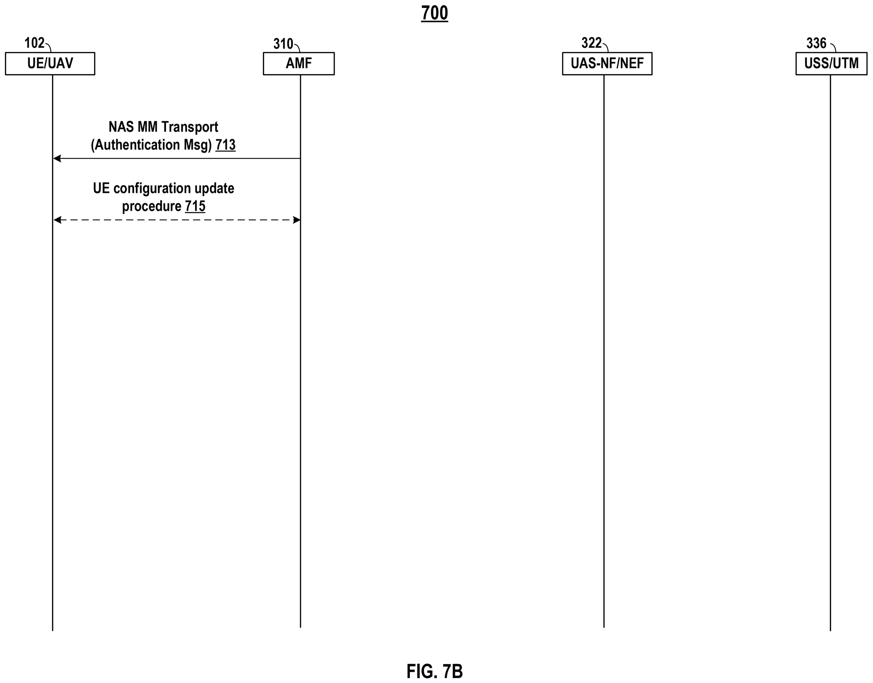

To overcome these and other challenges, the present disclosure provides a network element and UAV that perform coordinated registration procedures (as shown in FIG. 4) so that the above-described challenges may be avoided. The present network element may coordinate, e.g., the primary authentication procedure depicted in FIGs. 5A and 5B, the NSSAA procedure depicted in FIGs. 6A and 6B, and the UUAA-MM procedure depicted in FIGs. 7A and 7B to avoid unnecessary UUAA-MM procedure failure. The present network element may coordinate the registration procedures by initiating each one at a certain time or in a certain order.

For instance, the network element of the present disclosure may initiate the primary authentication procedure when a registration request is received from the UAV. When the registration request indicates support for NSSAA, the present core network element may initiate the NSSAA procedure after the UAV is registered with the access network. The core network element of the present disclosure may determine whether to perform a UUAA determination procedure based on certain criteria, as described below in connection with FIG. 4. The UUAA determination procedure may be initiated during the primary authentication procedure, for example. When the UUAA determination procedure indicates performing the UUAA-MM procedure, the network entity may wait until the NSSAA procedure is completed and the UAV is successfully registered with the network slice before initiating the UUAA-MM procedure. Once the UAV is successfully registered with the network slice, the network element may initiate the UUAA-MM procedure to register the UAV with the USS that maintains the uncrewed aerial services for the service provider. Once registered with the USS, the UAV may access uncrewed aerial services at the USS via the network slice of the access network, and a UAC may begin controlling the UAV.

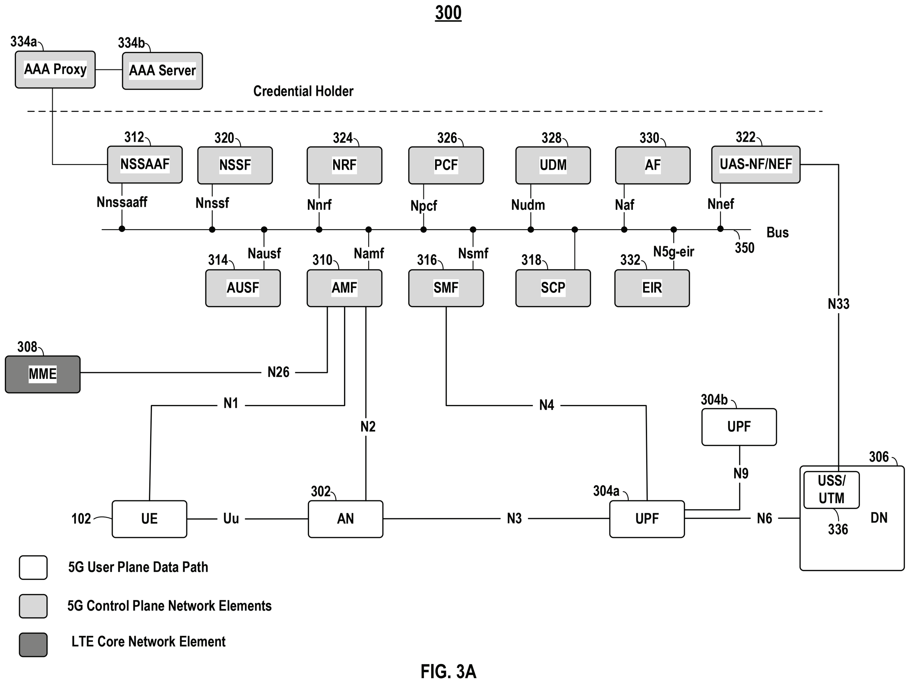

By coordinating these registration procedures, UUAA-MM procedure failure caused by its initiation prior to the completion of the NSSAA procedure may be avoided. Moreover, using the present techniques, the UAV and network element of the present disclosure both benefit from reduced power consumption and signaling overhead, as compared with other UAVs and network elements. Additional details of the registration procedures performed using the present techniques are described below in connection with FIGs. 3A-10.

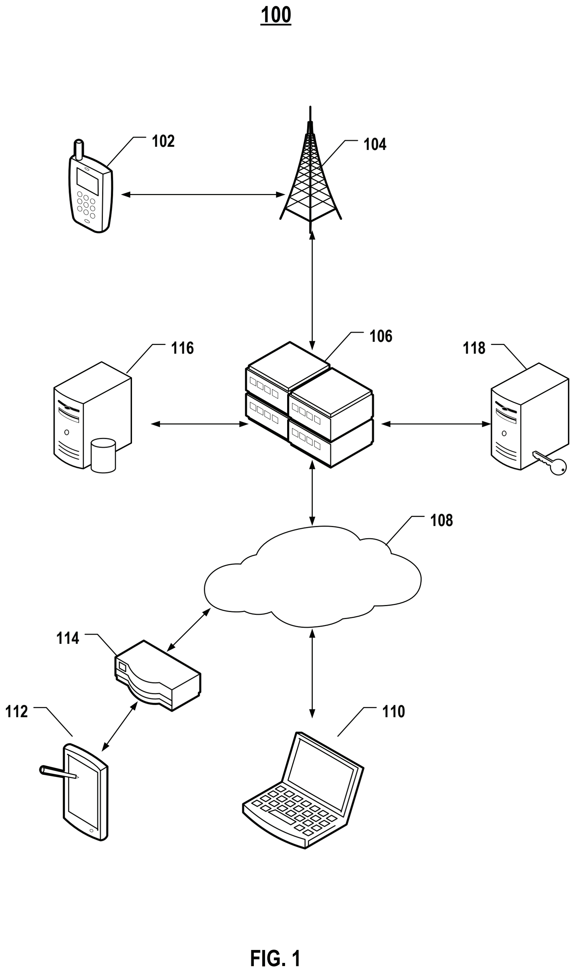

FIG. 1 illustrates an exemplary wireless network 100, in which some aspects of the present disclosure may be implemented, according to some embodiments of the present disclosure. As shown in FIG. 1, wireless network 100 may include a network of nodes, such as a user equipment (UE) 102, an access node 104, and a core network element 106. UE 102 may be any terminal device, such as a UAV (e.g., a drone or other uncrewed flying device), a mobile phone, a desktop computer, a laptop computer, a tablet, a vehicle computer, a gaming console, a printer, a positioning device, a wearable electronic device, a smart sensor, or any other device capable of receiving, processing, and transmitting information, such as any member of a vehicle to everything (V2X) network, a cluster network, a smart grid node, or an Internet-of-Things (IoT) node. It is understood that UE 102 is illustrated as a mobile phone simply by way of illustration and not by way of limitation.

Access node 104 may be a device that communicates with UE 102, such as a wireless access point, a base station (BS), a Node B, an enhanced Node B (eNodeB or eNB), a next-generation NodeB (gNodeB or gNB), a cluster master node, or the like. Access node 104 may have a wired connection to UE 102, a wireless connection to UE 102, or any combination thereof. Access node 104 may be connected to UE 102 by multiple connections, and UE 102 may be connected to other access nodes in addition to access node 104. Access node 104 may also be connected to other user equipments. When configured as a gNB, access node 104 may operate in millimeter wave (mmW) frequencies and/or near mmW frequencies in communication with the UE 102. When access node 104 operates in mmW or near mmW frequencies, the access node 104 may be referred to as an mmW base station. Extremely high frequency (EHF) is part of the RF in the electromagnetic spectrum. EHF has a range of 30 GHz to 300 GHz and a wavelength between 1 millimeter and 10 millimeters. Radio waves in the band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW or near mmW radio frequency band have extremely high path loss and a short range. The mmW base station may utilize beamforming with UE 102 to compensate for the extremely high path loss and short range. It is understood that access node 104 is illustrated by a radio tower by way of illustration and not by way of limitation.

Access nodes 104, which are collectively referred to as E-UTRAN in the evolved packet core network (EPC) and as NG-RAN in the 5G core network (5GC), interface with the EPC and 5GC through dedicated backhaul links (e.g., S1 interface). In addition to other functions, access node 104 may perform one or more of the following functions: transfer of user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, radio access network (RAN) sharing, multimedia broadcast multicast service (MBMS), subscriber and equipment trace, RAN information management (RIM), paging, positioning, and delivery of warning messages. Access nodes 104 may communicate directly or indirectly (e.g., through the 5GC) with each other over backhaul links (e.g., X2 interface). The backhaul links may be wired or wireless.

Core network element 106 may serve access node 104 and UE 102 to provide core network services. In some embodiments, core network element 106 includes a mobility management entity (MME), which may be part of an evolved packet core (EPC) for the LTE system. In some embodiments, core network element 106 may include an access and mobility management function (AMF), a session management function (SMF), or a user plane function (UPF), of a 5G core network (5GC) for the NR system. The AMF may be in communication with a Unified Data Management (UDM). The AMF is the control node that processes the signaling between the UE 102 and the 5GC. Generally, the AMF provides QoS flow and session management. All user Internet protocol (IP) packets are transferred through the UPF. The UPF provides UE IP address allocation as well as other functions. The UPF is connected to the IP Services. The IP Services may include the Internet, an intranet, an IP Multimedia Subsystem (IMS), a PS Streaming Service, and/or other IP services. It is understood that core network element 106 is shown as a set of rack-mounted servers by way of illustration and not by way of limitation. Additional examples of core network element 106 are depicted in FIGs. 3A, 3B, 4, 5A, 5B, 6A, 6B, 7A, and 7B. In some embodiments, core network element 106 may include one or more network elements.

Core network element 106 may connect with a large network, such as the Internet 108, or another Internet Protocol (IP) network, to communicate packet data over any distance. In this way, data from UE 102 may be communicated to other user equipments connected to other access points, including, for example, a computer 110 connected to Internet 108, for example, using a wired connection or a wireless connection, or to a tablet 112 wirelessly connected to Internet 108 via a router 114. Thus, computer 110 and tablet 112 provide additional examples of possible user equipments, and router 114 provides an example of another possible access node.

A generic example of a rack-mounted server is provided as an illustration of core network element 106. However, there may be multiple elements in the core network including database servers, such as a database 116, and security and authentication servers, such as an authentication server 118. Database 116 may, for example, manage data related to user subscription to network services. A home location register (HLR) is an example of a standardized database of subscriber information for a cellular network. Likewise, authentication server 118 may handle authentication of users, sessions, and so on. In the NR system, an authentication server function (AUSF) device may be the entity to perform user equipment authentication. In some embodiments, a single server rack may handle multiple such functions, such that the connections between core network element 106, authentication server 118, and database 116, may be local connections within a single rack.

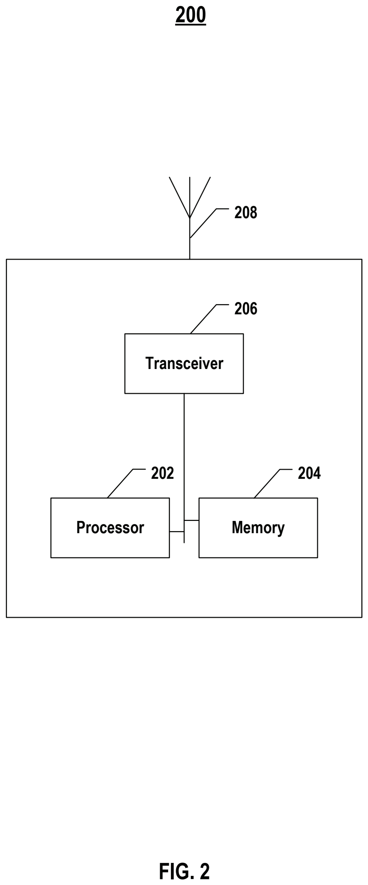

Each element in FIG. 1 may be considered a node of wireless network 100. More detail regarding the possible implementation of a node is provided by way of example in the description of a node 200 in FIG. 2. Node 200 may be configured as UE 102, access node 104, or core network element 106 in FIG. 1. Similarly, node 200 may also be configured as computer 110, router 114, tablet 112, database 116, or authentication server 118 in FIG. 1. As shown in FIG. 2, node 200 may include a processor 202, a memory 204, and a transceiver 206. These components are shown as connected to one another by a bus, but other connection types are also permitted. When node 200 is UE 102, additional components may also be included, such as a user interface (UI), sensors, and the like. Similarly, node 200 may be implemented as a blade in a server system when node 200 is configured as core network element 106. Other implementations are also possible.

Transceiver 206 may include any suitable device for sending and/or receiving data. Node 200 may include one or more transceivers, although only one transceiver 206 is shown for simplicity of illustration. An antenna 208 is shown as a possible communication mechanism for node 200. Multiple antennas and/or arrays of antennas may be utilized for receiving multiple spatially multiplex data streams. Additionally, examples of node 200 may communicate using wired techniques rather than (or in addition to) wireless techniques. For example, access node 104 may communicate wirelessly to UE 102 and may communicate by a wired connection (for example, by optical or coaxial cable) to core network element 106. Other communication hardware, such as a network interface card (NIC), may be included as well.

As shown in FIG. 2, node 200 may include processor 202. Although only one processor is shown, it is understood that multiple processors can be included. Processor 202 may include microprocessors, microcontroller units (MCUs), digital signal processors (DSPs), application-specific integrated circuits (ASICs), field-programmable gate arrays (FPGAs), programmable logic devices (PLDs), state machines, gated logic, discrete hardware circuits, and other suitable hardware configured to perform the various functions described throughout the present disclosure. Processor 202 may be a hardware device having one or more processing cores. Processor 202 may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise. Software can include computer instructions written in an interpreted language, a compiled language, or machine code. Other techniques for instructing hardware are also permitted under the broad category of software.

As shown in FIG. 2, node 200 may also include memory 204. Although only one memory is shown, it is understood that multiple memories can be included. Memory 204 can broadly include both memory and storage. For example, memory 204 may include random-access memory (RAM), read-only memory (ROM), static RAM (SRAM), dynamic RAM (DRAM), ferroelectric RAM (FRAM), electrically erasable programmable ROM (EEPROM), compact disc read-only memory (CD-ROM) or other optical disk storage, hard disk drive (HDD), such as magnetic disk storage or other magnetic storage devices, Flash drive, solid-state drive (SSD), or any other medium that can be used to carry or store desired program code in the form of instructions that can be accessed and executed by processor 202. Broadly, memory 204 may be embodied by any computer-readable medium, such as a non-transitory computer-readable medium.

Processor 202, memory 204, and transceiver 206 may be implemented in various forms in node 200 for performing wireless communication functions. In some embodiments, processor 202, memory 204, and transceiver 206 of node 200 are implemented (e.g., integrated) on one or more system-on-chips (SoCs). In one example, processor 202 and memory 204 may be integrated on an application processor (AP) SoC (sometimes known as a "host," referred to herein as a "host chip") that handles application processing in an operating system (OS) environment, including generating raw data to be transmitted. In another example, processor 202 and memory 204 may be integrated on a baseband processor (BP) SoC (sometimes known as a "modem," referred to herein as a "baseband chip") that converts the raw data, e.g., from the host chip, to signals that can be used to modulate the carrier frequency for transmission, and vice versa, which can run a real-time operating system (RTOS). In still another example, processor 202 and transceiver 206 (and memory 204 in some cases) may be integrated on an RF SoC (sometimes known as a "transceiver," referred to herein as an "RF chip") that transmits and receives RF signals with antenna 208. It is understood that in some examples, some or all of the host chip, baseband chip, and RF chip may be integrated as a single SoC. For example, a baseband chip and an RF chip may be integrated into a single SoC that manages all the radio functions for cellular communication.

Referring back to FIG. 1, core network element 106 may be configured to coordinate various registration procedures (as shown in FIG. 4) so that UE 102 may access uncrewed aerial services while avoiding unnecessary UUAA-MM procedure failure. These registration procedures may include, e.g., the primary authentication procedure depicted in FIGs. 5A and 5B, the NSSAA procedure depicted in FIGs. 6A and 6B, and the UUAA-MM procedure depicted in FIGs. 7A and 7B. Core network element 106 may coordinate the registration procedures by initiating each one at a certain time or in a certain order.

For instance, core network element 106 may initiate the primary authentication procedure when a registration request is received from UE 102. When the registration request indicates support for NSSAA, core network element 106 may initiate the NSSAA procedure during the primary authentication procedure or after UE 102 is registered with the access network. Core network element 106 may determine whether perform a UUAA-MM procedure based on certain criteria, as described below in connection with FIG. 4. Core network element 106 may perform the UUAA determination procedure before, after, or concurrent with the NSSAA procedure. Based on the outcome of the determination, core network element 106 may initiate the UUAA-MM procedure once UE 102 is registered with the network slice. The UUAA-MM procedure may register UE 102 with the USS, which maintains uncrewed aerial services. Once registered, UE 102 may access uncrewed aerial services at the USS via the network slice of the access network.

By coordinating these registration procedures, UUAA-MM procedure failure caused by its initiation prior to the completion of the NSSAA procedure may be avoided. Moreover, using the present techniques, UE 102 and core network element 106 both benefit from reduced power consumption and signaling overhead, as compared with other UAVs and network elements. Additional details of the registration procedures performed using the present techniques are described below in connection with FIGs. 3A-10.

FIG. 3A illustrates an exemplary service-based architecture 300 of a wireless communication system (referred to hereinafter as "system architecture 300), according to some embodiments of the present disclosure. System architecture 300 may include various network elements, such as 5G control plane (CP) network elements (also referred to herein as "network functions (NFs)) and LTE core network element(s) (e.g., MME 308), for example. System architecture 300 may also include access network 302 (e.g., including access node 104 of FIG. 1) and UE 102, among others.

System architecture 300 may be designed to support network function (NF) virtualization and software-defined networking. Moreover, system architecture 300 may leverage service-based interactions between different NFs. User plane (UP) functions may be separated from CP functions, as shown in FIG. 3A. The separation of UP functions and CP functions in system architecture 300 may enable independent scalability, evolution, and flexible deployments in either a centralized or distributed manner. The UP data path of system architecture 300 may include, e.g., UE 102 (e.g., a UAV), access network 302 (e.g., access node 104), one or more user plane function(s) (UPF) 304a, 304b, and a data network (DN) 306. The CP data path includes various NFs. These NFs may include one or more of, e.g., AMF 310, NSSAAF 312, AUSF 314, SMF 316, service communication proxy (SCP) 318, network slice selection function (NSSF) 320, UAS-NF/network exposure function (NEF) 322, network repository function (NRF) 324, policy control function (PCF) 326, UDM 328, Application Function (AF) 330, Equipment Identity Register (EIR) 332, Authentication and Authorization (AAA) Proxy (AAA-P) 334a, and/or AAA Server (AAA-S) 334b. Each of the NFs may be coupled to a bus 350 with via service-based interfaces (SIBs) labeled as, e.g., Namf, Nsmf, Nudm, etc. Where appropriate, system architecture 300 may include point-to-point connections labeled as, e.g., N1, N2, N3, etc. The responsibilities of each of the NFs are described below. A third-party entity, such as USS/ unified threat management (UTM) 336, may be located in DN 306 and maintain subscription services. These subscription services may include uncrewed aerial services.

In addition to those responsibilities described above in connection with FIG. 1, AMF 310 may perform registration management, connection management, reachability management, MM, access authentication, and/or access authorization, just to name a few. NSSAAF 312 may support and initiate NSSAA operations with AAA-S 334b. If AAA-S 334b is associated with a third-party entity (e.g., Amazon), NSSAAF 312 may contact AAA-S 334b via AAA-P 334a. As mentioned above, AUSF 314 may perform user equipment authentication. SMF 316 may perform session establishment, session modification, session release, maintain a tunnel between UPF 304a and access node 104 of access network 302, user equipment IP address allocation and management, Dynamic Host Configuration Protocol (DHCP) functions (for both server and client), downlink data notification, and support for Proxy-Call Session Control Function (P-CSCF) discovery for IMS services, for example. SCP 318 may enable indirect communication between various NFs by routing information from an originating NF to a destination NF. NSSF 320 may support various functions associated with network slicing. For example, NSSF 320 may select the set of network slice instances (NSIs) to serve UE 102, determine the allowed NSSAI, map the allowed NSSAI to the subscribed S-NSSAI(s), determine the configured NSSAI, map the configured NSSAI to the subscribed S-NSSAI(s), determine the set of AMF(s) 310 to serve UE 102 or a list of candidate AMF(s) 310 (e.g., by querying NRF 324).

UAS-NF/NEF 322 may support the exposure of network functions capabilities of NFs to external NFs such as third-party entities, e.g., USS/UTM 336. External exposure may include monitoring capability, provisioning capability, policy/charging capability, and analytics reporting capability. The monitoring capability may include the monitoring of certain events for UE 102 and making such monitoring event information available for external exposure via UAS-NF/NEF 322. The provisioning capability may include allowing an external party to provide information that can be used by UE 102. The policy/charging capability may include handling QoS and charging policy for UE 102 based on the request from an external party. UAS-NF/NEF 322 may be configured to facilitate communication between AMF 310 and USS/UTM 336 during the UUAA-MM procedure, as described below in connection with FIGs. 4, 7A, and 7B.

NRF 324 may enable NFs to disclose the service list offered by other NFs. PCF 326 may provide policy rules to certain NFs (e.g., AMF 310), and access subscription information relevant for policy decisions in a Unified Data Repository (UDR), for example. UDM 328 may perform subscription management, storage, and management of Subscription Permanent Identifier (SUPI) for each subscriber in the 5G system. AF 330 may provide application services to the subscribed user. For example, AF 330 may be associated with a video streaming service and/or uncrewed aerial services. If AF 330 is trusted, it may interact directly with other NFs. However, if AF 330 is a third-party entity, then it may interact with other NFs via UAS-NF/NEF 322.

Moreover, AMF 310 may be configured to coordinate various registration procedures (as shown in FIG. 4) so that UE 102 may access uncrewed aerial services at USS/UTM 336. These registration procedures may include, e.g., the primary authentication procedure depicted in FIGs. 5A and 5B, the NSSAA procedure depicted in FIGs. 6A and 6B, and the UUAA-MM procedure depicted in FIGs. 7A and 7B. AMF 310 may coordinate the registration procedures by initiating each procedure at a certain time or in a certain order. For instance, AMF 310 may initiate the primary authentication procedure when a registration request is received from UE 102. The primary authorization procedure may be performed by, e.g., UE 102, access network 302, one or more AMF(s) 310, AUSF 314, SMF 316, PCF 326, and/or UDM 328.

When the registration request indicates support for NSSAA, AMF 310 may initiate the NSSAA procedure concurrent with the primary authentication procedure or after UE 102 is registered with access network 302. The NSSAA procedure may be performed by UE 102, AMF 310, NSSAAF 312, AAA-P 334a, and AAA-S 334b, as shown in FIGs. 6A and 6B. AMF 310 may determine whether to perform a UUAA procedure based on certain criteria, as described below in connection with FIG. 4. AMF 310 may perform the UUAA determination procedure before, after, or concurrent with the NSSAA procedure. Based on the outcome of the UUAA determination, AMF 310 may initiate the UUAA-MM procedure once UE 102 is registered with the network slice. The UUAA-MM procedure may register UE 102 with USS/UTM 336. Once registered, UE 102 may access uncrewed aerial services at the USS/UTM 336 via the network slice assigned by AMF 310 and NSSF 320, among other NFs.

By coordinating these registration procedures, UUAA-MM procedure failure, caused by its initiation prior to the completion of the NSSAA procedure, may be avoided. Moreover, using the present techniques, UE 102 and AMF 310 both benefit from reduced power consumption and signaling overhead, as compared with other UAVs and AMFs. Additional details of the registration procedures performed using the present techniques are described below in connection with FIGs. 4-13.

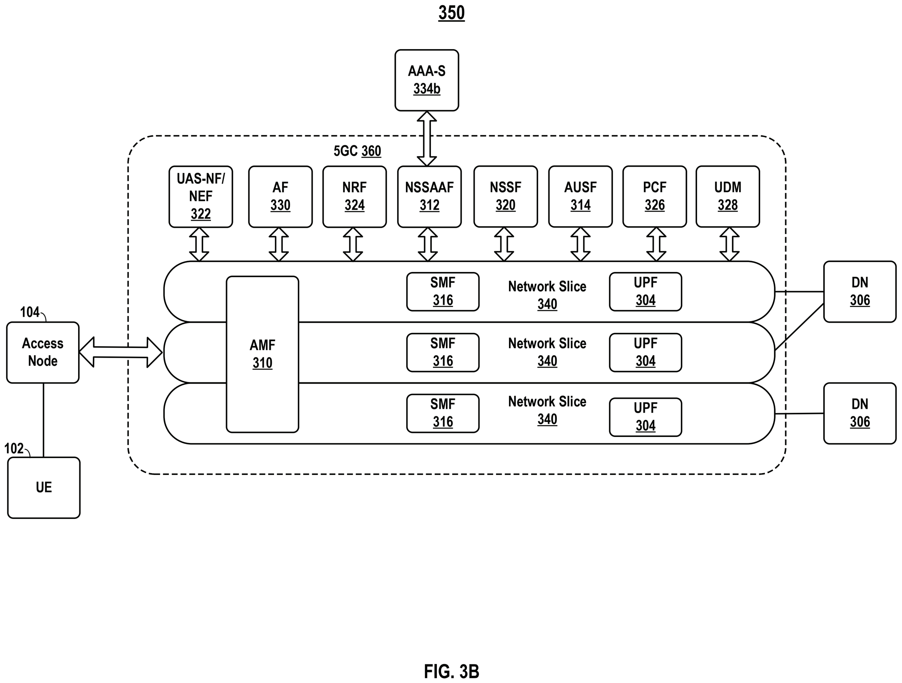

FIG. 3B illustrates an exemplary wireless communication system 350 that supports network slicing, according to some embodiments of the present disclosure. Referring to FIG. 3B, a network slice 340 may be viewed as a logical end-to-end network that can be dynamically created and dismantled. UE 102 may access multiple slices over the same interface via access node 104, for example. Each network slice 340 may serve a service type with a set of service-level agreements (SLAs). In some instances, the service type may include uncrewed aerial services. Network slice 340 may be defined within a public land mobile network (PLMN) and include control plane (CP) NFs and user plane (UP) NFs of 5GC 360. The AMF 310 instance that is serving UE 102 may be common (e.g., logically belong) to all NSIs that are serving UE 102. In the non-limiting example shown in FIG. 3B, there are three NSIs serving UE 102. However, more or fewer than three NSIs may serve use equipment 102 without departing from the scope of the present disclosure.

Identification of a network slice 340 (also referred to herein as a "network slice instance") may be performed via an NSSAI included in a registration request sent by UE 102. The NSSAI may include one or more S-NSSAIs. The S-NSSAI signaled by UE 102 (or otherwise obtained by AMF 310) may assist the network in selecting a particular NSI. An S-NSSAI may include a Slice/Service type (SST). The SST may refer to the expected network slice behavior in terms of features and services, such as supporting uncrewed aerial services. The SST may also include a slice differentiator (SD), which may include optional information that complements the SST(s), and may be used to differentiate between multiple network slices of the same SST.

AMF 310 may select one or more network slice(s) 340 when the NSSA procedure is initiated based on information received in the registration request as part of the primary authentication procedure. For example, AMF 310 may identify network slice(s) 340 that are associated with user subscription information. AMF 310 may interact with one or more of the NFs (e.g., NSSF 320, AUSF 314, UDM 328, PCF 326, NRF 324, AF 330, or UAS-NF/NEF 322) depicted in FIG. 3A to select the appropriate network slice(s) 340, e.g., based on the S-NSSAIs, PLMN ID, etc., that may be associated with the user subscription.

FIG. 4 illustrates a conceptual flow diagram of a first exemplary data flow 400 of the exemplary coordinated registration procedures performed between UE 102 (e.g., a UAV) and a set of network elements, according to some embodiments of the present disclosure. FIGs. 5A and 5B illustrate a conceptual flow diagram of a data flow 500 for the primary authentication procedure implemented as part of the exemplary coordinated registration procedures of FIG. 4, according to some embodiments of the present disclosure. FIGs. 6A and 6B illustrate a conceptual flow diagram of a data flow for an NSSAA procedure 600 implemented as part of the exemplary coordinated registration procedures of FIG. 4, according to some embodiments of the present disclosure. FIGs. 7A and 7B illustrate a conceptual flow diagram of a data flow for the UUAA-MM procedure 700 implemented as part of the exemplary coordinated registration procedures of FIG. 4, according to some embodiments of the present disclosure. FIGs. 4, 5A, 5B, 6A, 6B, 7A, and 7B will be described together.

Referring to FIG. 4, the exemplary coordinated registration procedures may be implemented between UE 102 and a set of network elements. UE 102 may be configured as a UAV, and the user of the UAV may be subscribed to uncrewed aerial services maintained at USS/UTM 336, for example. Moreover, the exemplary coordination of these registration procedures may include initiating the UUAA-MM procedure after the NSSAA procedure is complete and UE 102 is registered with a network slice that supports uncrewed aerial services. The exemplary coordination of registration procedures may be implemented by a set of network elements that include, e.g., AMF 310, UDM 328, NSSAAF 312, UAS-NF/NEF 322, AAA-P 334a, AAA-S 334b, and USS/UTM 336. However, the set of network elements may also include other network elements not shown in FIG. 4, but which are depicted in FIGs. 5A-7B, for example.

Referring to FIG. 4, the exemplary coordination of the registration procedure may begin when UE 102 sends (at 401) a registration request to AMF 310. The registration request may be sent when UE 102 is powered on or when it moves into a different coverage area, which triggers a new registration with a different access network and/or network slice. By way of example, UE 102 configured as a UAV may be flown into a coverage area (e.g., a different public land mobile network (PLMN)) associated with a different AMF than the one originally selected. Here, the UAV may be registered with the new AMF associated with the new coverage area. In some scenarios, the new AMF may implement the NSSAA procedure to register UE 102 with a different network slice, so that an interruption to the uncrewed aerial services may be avoided.

Although shown separately in FIG. 4, the registration request sent (at 401) by UE 102 to AMF 310 may be considered part of one or more of the primary authentication procedure, the NSSAA procedure, and/or the UUAA-MM procedure, in some embodiments. To that end, the registration request may include information that may be used by the set of network elements to register UE 102 with an access network (via a primary authorization procedure), a network slice that supports uncrewed aerial services (via an NSSAA procedure), and/or USS/UTM 336 (via a UUAA-MM procedure).

The registration request may include one or more of, e.g., access network parameters, registration type information, a generic public subscription identifier (GPSI), a subscription concealed identifier (SUCI), a 5G-global unique temporary identifier (GUTI), a globally unique AMF identifier (GUAMI), a 5G temporary mobile subscriber identifier (5G-TMSI), a permanent equipment identifier (PEI), information associated with a requested NSSAI, a mapping of the requested NSSAI, a default configured NSSAI indication, an S-NSSAI, a a civil aviation administration (CAA)-level UAV identification (ID) assigned by USS/UTM 336, USS identification information (e.g., USS address), UUAA aviation payload, etc.

Upon receipt of the registration request, AMF 310 may initiate (at 403) a primary authentication procedure to register UE 102 with an access network. Additional details of the primary authentication procedure are depicted in FIGs. 5A and 5B.

Referring to FIGs. 5A and 5B, the access node of access network 302 may perform (at 503) AMF selection based on information included in the registration request. For example, access network 302 may select the AMF based on one or more of, e.g., the GUTI, the GUAMI, the 5G-TMSI, among other information. Once selected, the registration request may be forwarded (at 505) to, e.g., new AMF 310a. New AMF 310a may include an AMF located in a different tracking area (TA) or PLMN, and into which UE 102 moves. In that case, old AMF 310b may be associated with another AMF of a previous TA or PLMN. Additionally and/or alternatively, new AMF 310b is associated with an initial registration when UE 102 is powered on. In this case, operations associated with UE handover from old AMF 310b to new AMF 310a, which are described below, may be skipped.

Referring to FIG. 5A, during handover, new AMF 310a may send (at 507) an Namf_Communication_UEContext Transfer message to old AMF 310b to complete the registration request. If the 5G-GUTI was included in the registration request and the serving AMF has changed since the last primary authentication procedure, new AMF 310a may invoke the Namf_Communication_UEContext Transfer message to request the SUPI and UE context from old AMF 310b. The Namf_Communication_UEContext Transfer message may include information such as a complete registration request non-access stratum (NAS) message, which may be integrity protected.

Old AMF 310b may use either the 5G-GUTI and/or the integrity protected complete registration request NAS message, or the SUPI and an indication that UE 102 is validated by new AMF 310a, to verify integrity protection. Once verified, old AMF 310b may send (at 509) the SUPI and/or UE context information to new AMF 310a via an Namf_Communication_UEContext transfer response message.

Optionally, if neither UE's 102 registration request nor the Namf_Communication_UEContext transfer response message includes a SUCI for UE 102, new AMF 310a may send (at 511) an identity request message to request the SUCI from UE 102. UE 102 may respond (at 513) with an identity response message that includes the SUCI. UE 102 may derive the SUCI using a provisioned public key of the home public land mobile network (HPLMN), for example. In some instances, new AMF 310a may decide to initiate the primary authentication procedure by invoking an AUSF 314. Here, new AMF 310a may perform (at 515) AUSF selection based on the SUPI and/or SUCI associated with UE 102.

New AMF 310a may perform (at 517) an AUSF authentication and/or security procedure to authenticate UE 102 with the selected AUSF. Once AUSF authentication is complete, AUSF 314 may send relevant security related information to new AMF 310a. If new AMF 310a provided a SUCI, AUSF 314 may send the SUPI to new AMF 310a. Security context information may be shared with access network 302, which stores this information to protect messages exchanged between UE 102 and the set of network elements shown in FIGs. 4, 5A, 5B, 6A, 6B, 7A, and 7B.

If the AMF changes from old AMF 310b to new AMF 310a, then new AMF 310a may send (at 519) an Namf_Communication _Registration status update message, which informs old AMF 310b of the new registration of UE 102 with new AMF 310a. If the initial registration request does not include the PEI, then new AMF 310a and UE 102 may perform (at 521) an identity request/response operation, which may result in a PEI being received by new AMF 310a. Optionally, new AMF 310a may perform a mobile equipment (ME) identity check by invoking (at 523) an N5g-eir-EquipmentIdentityCheck_Get service operation with EIR 332. In some embodiments, the N5g-eir-EquipmentIdentityCheck_Get service operation may include a PEI check.

To obtain subscription data (which may include uncrewed aerial services subscription data) associated with UE 102, new AMF 310a may perform (at 525) a UDM selection procedure based on the SUPI associated with UE 102. As mentioned above, the SUPI may be included in the initial registration request message by UE 102. Otherwise, the SUPI may be obtained by new AMF 310a during the primary authentication procedure. In either case, new AMF 310a may register with UDM 328 by sending (at 527a) an Nudm_UECM_Registration message. Moreover, new AMF 310a may obtain the subscription data by sending (at 527b) a Nudm_SDM _Get message. The subscription data may include one or more of, e.g., uncrewed aerial services subscription data, access, and mobility subscription data, SMF selection subscription data, UE context in SMF data, and/or location services (LCS) mobile origination data, just to name a few. The access and mobility subscription data indicate whether UE 102 is allowed to include NSSAI in the RRC connection establishment procedure. Additionally and/or alternatively, new AMF 310a may send (at 527c) an Nudm_SDM_Subscribe message to subscribe to use the Nudm_SDM_Subscribe service operation that causes UDM 328 to return subscription data to new AMF 310a (e.g., subscription data updates). During handover from old AMF 310b to new AMF 310a, UDM 328 may initiate (at 527d) a deregistration procedure by sending an Nudm_UECM_Deregistration Notification message. Old AMF 310b may unsubscribe for updates to subscription data by sending (at 527e) an Nudm_SDM_Unsubscribe message to UDM 328.

Referring again to FIG. 4, once the uncrewed aerial subscription data is obtained, AMF 310 (e.g., new AMF 310a in FIGs. 5A and 5B) may perform (at 405) the UUAA determination procedure. The UUAA determination procedure, which may be performed concurrent with the primary authorization procedure, may be used to determine whether to perform (at 413) the UUAA-MM procedure. AMF 310 may determine whether to perform the UUAA-MM procedure (via the UUAA determination procedure) based on various criteria. For example, the UUAA determination procedure may indicate performing the UUAA-MM procedure based on one or more of the following criteria: 1) the uncrewed aerial subscription data for UE 102 is valid (e.g., not expired), 2) the local operator policy indicates the UUAA determination procedure is performed during the primary authentication procedure, 3) there is no valid UUAA result from a previous UUAA-MM procedure (e.g., UE 102 is not already registered with USS/UTM 336), and/or 4) CAA-level UAV ID is provided in the initial registration request. In some embodiments, the UUAA determination procedure may indicate performing the UUAA-MM procedure when all of the foregoing criteria are met. In some other embodiments, the UUAA determination procedure may indicate performing the UUAA-MM procedure when at least one of the foregoing criteria is/are met. The UUAA determination procedure may conclude while the primary authentication procedure is still ongoing. Thus, when the UUAA determination procedure indicates performing the UUAA-MM procedure, AMF 310 waits until UE 102 is registered with the network slice via the NSSAA procedure before initiating the UUAA-MM procedure. This coordination is absent from other registration procedures, which initiate the UUAA-MM procedure when the UUAA determination procedure indicates its performance, regardless of whether UE 102 is registered with a network slice that supports the uncrewed aerial services.

Referring again to FIG. 5A, if new AMF 310a decides to initiate PCF communication, a PCF selection procedure may be performed (at 529). In some embodiments, new AMF 310a may perform (at 531) an AM policy association establishment/modification procedure. If new AMF 310a notifies mobility restrictions (e.g., restricted location(s) associated with UE 102) to PCF 326 for adjustment, or if PCF 326 updates the mobility restrictions itself due to some conditions (e.g., application in use, time, date, etc.), PCF 326 may provide the updated mobility restrictions to new AMF 310a. If new AMF 310a supports data network name (DNN) replacement, new AMF 310a may provide PCF 326 with the allowed NSSAI and, if available, the mapping of the allowed NSSAI. If PCF 326 supports DNN replacement, PCF 326 may provide new AMF 310a with triggers for DNN replacement.

Referring to FIG. 5B, new AMF 310a may send (at 533) an Nsmf_PDUSession_UpdateSMContext/Nsmf_PDUSession_ReleaseSMContext message to SMF 316 under certain conditions. For example, this message may be sent if the initial registration request includes a list of protocol data unit (PDU) session(s) UE 102 wants to activate. By sending this message, SMF 316 may activate user plane connection(s) for the desired PDU session(s). When AMF transfer occurs, new AMF 310a may notify SMF 316 of each PDU session for which it has taken over the signaling path responsibility from old AMF 310b. New AMF 310a may invoke the Nsmf_PDUSession_UpdateSMContext service operation using SMF information received from the old AMF 310b, for example.

If new AMF 310a and old AMF 310b are in the same PLMN, new AMF 310a may send (at 535) a UE Context Modification Request to Non-3GPP Inter-Working Function (N3IWF)/ Trusted Non-3GPP Gateway Function (TNGF)/ Wireline Access Gateway Function (W-AGF) 502. If AMF transfer occurs and old AMF 310b indicates that UE 102 is in CM-CONNECTED state via N3IWF/W-AGF/TNGF 502, and if new AMF 310a and old AMF 310b are in the same PLMN, new AMF 310a may create a next generation (NG) application protocol (NGAP) user equipment association that is sent to N3IWF/TNGF/W-AGF 502 (to which the UE 102 is connected). This may release the existing NGAP user equipment association between old AMF 310b and N3IWF/TNGF/W-AGF 502. N3IWF/TNGF/W-AGF 502 may send (at 537) a UE Context Modification (CM) Response message indicating to new AMF 310a the release of the previous NGAP UE association with old AMF 310b.

After receiving the UE CM Response message, new AMF 310a may send (at 539a) a Nudm_UECM_Registration message to register with UDM 328, but with the access type set to "non-3GPP access." UDM 328 may store the access type associated with new AMF 310a but may not remove the AMF identity associated with the other access type, if any. Once UDM 328 maintains the associated access type information for new AMF 310a, UDM 328 may send (at 539b) a Nudm_UECM_DeregistrationNotification message to old AMF 310b corresponding to the same access type (e.g., non-3GPP). The old AMF removes the UE context for non-3GPP access. Old AMF 310b may send (at 539c) an Nudm_SDM_Unsubscribe message to UDM 328 to unsubscribe to updates of subscription data for UE 102.

Referring to FIGs. 4 and 5B, at this point, new AMF 310a may send (at 407) a registration accept message to UE 102. If UE 102 indicated its support for the NSSAA procedure in the UE MM core network capability information in the initial registration request, new AMF 310a may include the pending NSSAI and the S-NSSAIs that map to an S-NSSAI of the HPLMN. Then, new AMF 310a may perform (at 541) a user equipment policy association establishment with PCF 326. PCF 326 may trigger a user equipment configuration update procedure. When UE 102 has successfully updated itself based on the information included in the registration accept message, it may send (at 409) a registration complete message to new AMF 310a. Once the registration complete message is received, new AMF 310a may initiate (at 411) the NSSAA procedure to register UE 102 with a network slice that supports uncrewed aerial services. Additional details of the NSSAA procedure are provided below in connection with FIGs. 6A and 6B.

NSSAA procedure 600 depicted in FIGs. 6A and 6B may correspond to the NSSAA procedure shown (at 411) in FIGs. 4 and 5B, for example. NSSAA procedure 600 may be performed for one or more network slices that support uncrewed aerial services and/or are associated with USS/UTM 336. NSSAA procedure 600 may be implemented by, e.g., UE 102, AMF 310, NSSAAF 312, AAA-P 334a, and/or AAA-S 334b. In some embodiments, AAA-S 334b may be hosted by an HPLMN operator (e.g., Verizon, AT&T, Sprint, etc.) or a third-party entity (e.g., Amazon), which has a business relationship with the HPLMN operator. AAA-P 334a in the HPLMN may be involved in the NSSAA procedure, e.g., if AAA-S 334b belongs to the third-party entity rather than the HPLMN operator. However, when AAA-S 334b belongs to the HPLMN operator, AAA-P 334a may not be involved in the NSSAA procedure.

Referring to FIG. 6A, for one or more S-NSSAIs (e.g., indicated in the initial registration request shown in FIGs. 4 and 5A) for which NSSAA is performed, AMF 310 may trigger (at 601) the initiation of NSSAA procedure 600. Then, AMF 310 may send (at 603) an extensible authentication procedure (EAP) identity request for the S-NSSAI in a NAS MM transport message to UE 102. The NAS MM transport message may include an indication of the corresponding S-NSSAI for which NSSAA procedure 600 is performed. UE 102 may respond (at 605) with an EAP identity response for the S-NSSAI, as well as an indication of the S-NSSAI, in a NAS MM transport message.

Still referring to FIG. 6A, AMF 310 may send (at 607) the EAP identity response to NSSAAF 312 in an Nnssaaf_NSSAA_Authenticate request message. Along with the EAP identity response message, the Nnssaaf_NSSAA _Authenticate request message may include the GPSI and S-NSSAI. If AAA-P 334a is present (e.g., because AAA-S 334b belongs to a third-party entity and the operator deploys a proxy towards third party entities), NSSAAF 312 may forward (at 609) the EAP identity response to AAA-P 334a in an AAA protocol message, which also includes the GPSI and S-NSSAI. Otherwise, AMF 310 forwards the AAA protocol message (e.g., EAP identity response, GPSI, S-NSSAI) directly to AAA-S 334b. NSSAAF 312 identifies the appropriate AAA-S 334b for the NSSAA procedure based on a local configuration of the AAA-S address associated with the S-NSSAI. Thus, NSSAAF 312 may generate the AAA protocol message based on the AAA protocol supported by AAA-S 334b.

If used, AAA-P 334a forwards (at 611) the AAA protocol message to AAA-S 334b. AAA-S 334b may maintain the GPSI and create an association between the EAP identity and the GPSI in the EAP ID response message. In so doing, AAA-S 334b may use the GPSI/EAP identity to revoke an authorization or to trigger reauthentication at a later time. AAA-S 334 may send (at 613) an AAA protocol message that includes the EAP ID response message, GPSI, and S-NSSAI to AAA-P 334a (or directly to NSSAAF 312). When sent to the proxy, AAA-P 334a may forward (at 615) the AAA protocol message with the EAP ID response message, GPSI, and S-NSSAI to NSSAAF 312. NSSAAF 312 may send (at 617) the EAP identity response message, GPSI, and S-NSSAI to AMF 310 via an Nnssaaf_NSSAA _Authenticate response message. Then, AMF 310 may forward the EAP identity response message, GPSI, and S-NSSAI to UE 102 in a NAS MM transport message. UE 102 may return (at 621) an NAS MM transport message to AMF 310. AMF 310 may send (at 623) an Nnssaaf_NSSAA_Authenticate request (e.g., that includes the EAP identity response, GPSI, S-NSSAI) to NSSAAF 312, which sends (at 625) an AAA protocol message to AAA-P 334a (or directly to AAA-S 334b).

Referring to FIG. 6B, AAA-P 334a may send (at 627) an AAA protocol message that includes the EAP identity response, GPSI, S-NSSAI to AAA-S 334b, which may complete the EAP authentication procedure. AAA-S 334b may store the S-NSSAI for which authorization has been granted in order to trigger re-authentication and/or re-authorization based on its local policies. AAA-S 334b may send (at 629) an AAA protocol message that includes an indication of EAP success or failure, the GPSI, and the S-NSSAI to AAA-P 334a or directly to NSSAAF 312. If a proxy is used, AAA-P 334a may forward (at 631) the AAA protocol message (e.g., including EAP success or failure, GPSI, S-NSSAI) received from AAA-S 334b to NSSAAF 312. Then, NSSAAF 312 may send (at 633) an Nnssaaf_NSSAA _Authenticate response, which includes an indication of EAP success or failure, GPSI, and S-NSSAI, to AMF 310. AMF 310 may send (at 635) a NAS MM transport message indicating the EAP success or failure to UE 102. An indication of EAP success may correspond to successful network slice registration for the requested S-NSSAI (e.g., that supports uncrewed aerial services). On the other hand, an indication of EAP failure may correspond to unsuccessful network slice registration for the requested S-NSSAI. Once registered with a network slice that supports uncrewed aerial services and/or is associated with USS/UTM 336, AMF 310 may initiate the UUAA-MM procedure, as described below in connection with FIGs. 7A and 7B.

Referring to FIGs. 7A and 7B, UUAA-MM procedure 700 may correspond to the UUAA-MM procedure shown (at 413) in FIG. 4, for example. UUAA-MM procedure 700 may register UE 102 (e.g., UAV) with USS/UTM 336. UUAA-MM procedure 700 may be implemented by, e.g., UE 102, AMF 310, UAS-NF/NEF 322, and/or USS/UTM 336.

Referring to FIG. 7A, in response to UE's 102 successful registration with a network slice, AMF 310 may trigger (at 701) the initiation of UUAA-MM procedure 700. Then, AMF 310 may select UAS-NF/NEF 322 based on, e.g., local operator configuration or based on a UE-provided identity, such as a USS address. Once UAS-NF/NEF 322 is selected, AMF 310 may send (at 703) an Nnef_Authentication _Request that requests the authentication of UE 102 by USS/UTM 336. The Nnef_Authentication_Request may include information associated with UE 102, e.g., such as the GPSI and/or CAA-level UAV ID provided by UE 102 in the initial registration request of FIGs. 4 and 5A, or otherwise obtained during the primary authentication procedure depicted in FIGs. 5A and 5B. Optionally, the USS address of USS/UTM 336 and/or UE location information (e.g., cell ID) may be included in the Nnef_Authentication _Request.

Still referring to FIG. 7A, UAS-NF/NEF 322 may determine the USS for which the UUAA-MM procedure is performed based on information included in the Nnef_Authentication _Request. For example, UAS-NF/NEF 322 may identify the appropriate USS based on the USS address (if included in the Nnef_Authentication _Request) and/or based on the CAA-level UAV ID, which is assigned to UE 102 by USS/UTM 336. Once identified, UAS-NF/NEF 322 may send an Naf_Authentication_Request to USS/UTM 336. The Naf_Authentication _Request may include information, e.g., such as the GPSI, the CAA-level UAV ID, and/or the cell ID of UE 102.

Depending on the authentication method used by USS/UTM 336, multiple round-trip messages may be sent between USS/UTM 336 and UE 102 (via UAS-NF/NEF 322 and AMF 310). In the present disclosure, six authentication messages are exchanged (at 707a-707f). However, more or fewer messages may be exchanged, depending on the authentication method used by USS/UTM 336.

Referring to FIG. 7A, USS/UTM 336 may send (at 707a) an authentication response that includes, e.g., the GPSI. The authentication response sent by USS/UTM 336 may also include an authentication message (e.g., an N33 message) that indicates the authentication method used by USS/UTM 336, and which may be forwarded to UE 102 via NAS MM transport messages. In some embodiments, the authentication message may include a callback uniform resource identifier (URI), which may be used for a subsequent authenticate request sent (at 707f) by UAS-NF/NEF 322. Once received, UAS-NF/NEF 322 may forward (at 707b) an Nnef_Autheticate_Response, which includes the GPSI and authentication message, to AMF 310. AMF 310 may forward (at 707c) the authentication message to UE 102 as an NAS_MM transport message. UE 102 may respond (at 707d) with a NAS_MM transport message that includes information, e.g., the GPSI, CAA-level UAV ID, and a UUAA aviation payload (if not provided by UE 102 in the initial primary authentication request). AMF 310 may send (at 707e) an Nnef_Auth _Request, which includes the GPSI, CAA-level UAV ID, authentication message, and/or UUAA aviation payload, to UAS-NF/NEF 322. UAS-NF/NEF 322 may send (at 707f) the authenticate request to USS/UTM 336. These multiple round-trip messages may indicate to UE 102 and AMF 310 that a UUAA-MM result is pending, and UE 102 is authenticated.

Once the authenticate request is received (at 707f), USS/UTM 336 may determine whether UE 102 can be authorized by comparing UE identity information with subscription information maintained by USS/UTM 336. For example, USS/UTM 336 may maintain a look-up table that correlates UE identity information (e.g., GPSI, CAA-level UAV ID, and/or cell ID) with subscription information. The subscription information may indicate whether a UE's subscription is valid or invalid, in some embodiments. A valid subscription may indicate that UE 102 can be authenticated for access to uncrewed aerial services. Otherwise, an invalid subscription may indicate that UE 102 cannot be authorized for access to uncrewed aerial services. By way of example, UE 102 may pay a monthly fee to subscribe to uncrewed aerial services maintained by USS/UTM 336. When a payment for the subscription is received, the look-up table may indicate that the subscription associated with a particular UE (e.g., GPSI, CAA-level UAV ID, and/or cell ID) is valid. When UE 102 has a valid subscription, USS/UTM 336 may allow UE 102 to be registered with USS/UTM 336, and access to the uncrewed aerial services may be granted. Otherwise, when the subscription goes unpaid or expires, the look-up table may indicate that the subscription for that UE is invalid, and hence, UE 102 may not register with USS/UTM 336 during the UUAA-MM procedure.

Once the UUAA-MM result is determined (e.g., success or failure), USS/UTM 336 may send (at 709) an authenticate response, which includes GPSI, CAA-level UAV ID, authentication message, and/or UUAA-MM result (e.g., success or failure), to UAS-NF/NEF 322. USS/UTM 336 may include a UUAA authorization payload associated with UE 102. The UUAA authorization payload may include security information that secures communications between UE 102 and USS/UTM 336. UAS-NF/NEF 322 may send (at 711) the authenticate response as an Nnef_Auth _Response to AMF 310. The Nnef_Auth _Response may indicate a success or failure of the UUAA-MM procedure to AMF 310, and may include one or more of the information included in the authenticate message by USS/UTM 336. AMF 310 may determine whether the UUAA-MM procedure succeeded or failed based on the Nnef_Auth _Response.

Referring to FIG. 7B, AMF 310 may send (at 713) the authentication message (e.g., indicating UUAA-MM success/failure) to UE 102. If UUAA-MM succeeded, AMF 310 may trigger (at 715) a user equipment configuration update procedure to deliver to UE 102 the UAV authorization information from USS/UTM 336. UE 102 may access the uncrewed aerial services by including the UAV authorization information in messages sent to USS/UTM 336 (e.g., via AMF 310).

By coordinating the registration procedures (e.g., primary authentication procedure, the NSSAA procedure, and the UUAA-MM procedure) described above in connection with FIGs. 4, 5A, 5B, 6A, 6B, 7A, and 7B, UUAA-MM procedure failure caused by its initiation prior to the completion of the NSSAA procedure may be avoided. Moreover, using the present techniques of FIGs. 4, 5A, 5B, 6A, 6B, 7A, and 7B, each of UE 102 and AMF 310 may benefit from reduced power consumption and signaling overhead, as compared with other user equipments and AMFs that do not coordinate registration procedures for access to uncrewed aerial services.

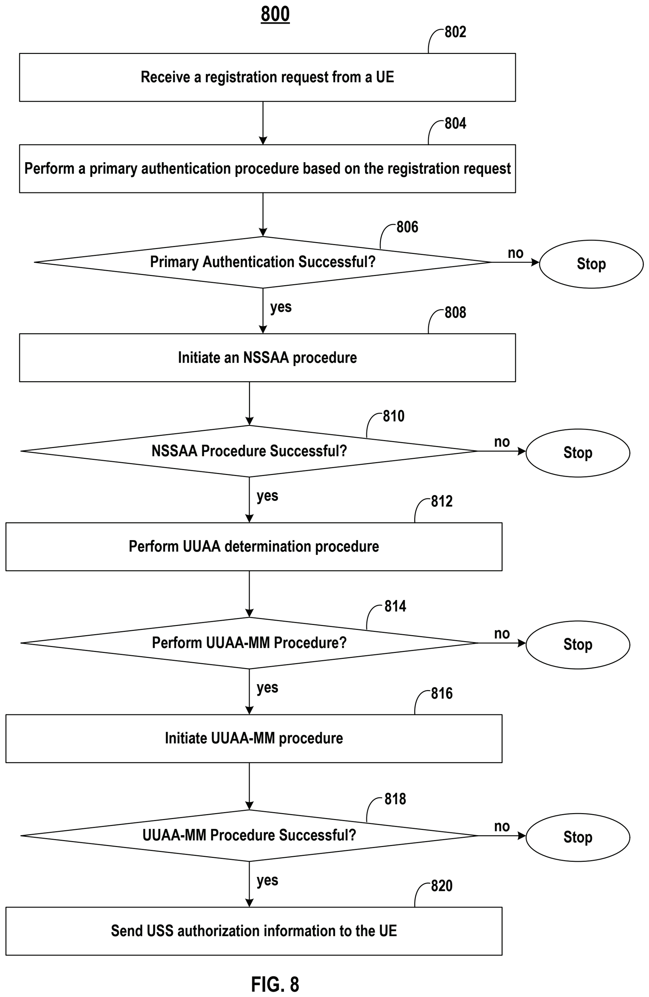

FIG. 8 illustrates a flowchart of an exemplary method 800 of wireless communication, according to embodiments of the disclosure. Exemplary method 800 may be performed by an apparatus for wireless communication, e.g., such as core network element 106, node 200, AMF 310, apparatus 902/902', network element 1250, or any other core network element or group of core network elements described herein. Method 800 may include steps 802-820 as described below. It is to be appreciated that some of the steps may be optional, and some of the steps may be performed simultaneously, or in a different order than shown in FIG. 8.

Referring to FIG. 8, at 802, the apparatus may receive, from the UE, a registration request to register with the access network, the registration request indicating support for the NSSAA procedure. For example, referring to FIG. 4, the exemplary coordination of registration procedure may begin when UE 102 sends (at 401) a registration request to AMF 310. The registration request may be sent when UE 102 is powered on or when it moves into a different coverage area that triggers a new registration with a different access network and/or network slice. By way of example, UE 102 (e.g., a UAV) may be flown into a new coverage area (e.g., a different public land mobile network (PLMN)) associated with a different AMF than the one originally selected. Here, the UAV may be registered with the new AMF associated with the new coverage area. In some scenarios, the new AMF may implement the NSSAA procedure to register user equipment with a different network slice, so that an interruption to uncrewed aerial services may be avoided. Although shown separately in FIG. 4, the registration request sent (at 401) by UE 102 to AMF 310 may be considered part of one or more of the primary authentication procedure, the NSSAA procedure, and/or the UUAA-MM procedure, in some embodiments. To that end, the registration request may include information that may be used by the set of network elements to register UE 102 with an access network (via a primary authorization procedure), a network slice that supports uncrewed aerial services (via an NSSAA procedure), and/or USS/UTM 336 (via a UUAA-MM procedure). For example, the registration request may include one or more of, e.g., access network parameters, registration type information, a GPSI, a SUCI, a GUTI, a GUAMI, a 5G-TMSI, a PEI, information associated with a requested NSSAI, a mapping of the requested NSSAI, a default configured NSSAI indication, an S-NSSAI, a CAA-level UAV ID assigned by USS/UTM 336, USS identification information (e.g., USS address), UUAA aviation payload, etc.

At 804, the apparatus may initiate a primary authentication procedure based on the registration request. For example, referring to FIG. 4, upon receipt of the registration request, AMF 310 may initiate (at 403) a primary authentication procedure to register UE 102 with an access network. Additional details of the primary authentication procedure are described above in connection with FIGs. 5A and 5B.

At 806, the apparatus may determine whether the primary authentication procedure is successful. For example, referring to FIG. 4, when UE 102 has successfully updated itself based on the information included in the registration accept message, it may send (at 409) a registration complete message to new AMF 310a. New AMF 310a may determine the primary authentication procedure is successful when the registration complete message is received from UE 102. In response to determining access network registration success, the operations may move to 810. Otherwise, if one or more network entities indicates UE 102 is unable to successfully register with the access network, the operations may stop. New AMF 310a may indicate access network registration failure to UE 102. Here, UE 102 may again attempt to register with the access network.

At 808, the apparatus may initiate an NSSAA procedure to register the user equipment with a network slice that supports uncrewed aerial services. For example, referring to FIG. 4, once the registration complete message is received, new AMF 310a may initiate (at 411) the NSSAA procedure to register UE 102 with a network slice that supports uncrewed aerial services. Additional details of the NSSAA procedure are provided above in connection with FIGs. 6A and 6B.

At 810, the apparatus may determine whether the NSSAA procedure successfully registered the user equipment with the network slice that supports uncrewed aerial services. For example, referring to FIG. 6B, NSSAAF 312 may send (at 633) an Nnssaaf_NSSAA_Authenticate response to AMF 310, which includes an indication of EAP success or failure, GPSI, and S-NSSAI. AMF 310 may send (at 635) a NAS MM transport message indicating the EAP success or failure to UE 102. An indication of EAP success may correspond to successful network slice registration for the requested S-NSSAI that supports uncrewed aerial services. On the other hand, an indication of EAP failure may correspond to unsuccessful network slice registration for the requested S-NSSAI. Thus, AMF 310 may determine the NSSAA procedure was successful or unsuccessful based on the Nnssaaf_NSSAA_Authenticate response received from NSSAAF 312. When the NSSAA procedure fails, the operations may conclude, and no UUAA-MM procedure may be performed. In some embodiments, UE 102 and/or AMF 310 may re-attempt the NSSAA procedure. Otherwise, when the NSSAA procedure succeeds, the operations may move to 812.

At 812, the apparatus may perform a UUAA determination procedure. For example, referring to FIG. 4, once the uncrewed aerial subscription data is obtained, AMF 310 (e.g., new AMF 310a in FIGs. 5A and 5B) may perform (at 405) the UUAA determination procedure. The UUAA determination procedure, which may be performed concurrent with the primary authorization procedure, may be used to determine whether to perform (at 413) the UUAA-MM procedure. AMF 310 may determine whether to perform the UUAA-MM procedure (via the UUAA determination procedure) based on various criteria. For example, the UUAA determination procedure may indicate performing the UUAA-MM procedure based on one or more of the following criteria: 1) the uncrewed aerial subscription data for UE 102 is valid (e.g., not expired), 2) the local operator policy indicates the UUAA determination procedure is performed during the primary authentication procedure, 3) there is no valid UUAA result from a previous UUAA-MM procedure (e.g., UE 102 is not already registered with USS/UTM 336), and/or 4) CAA-level UAV ID is provided in the initial registration request. In some embodiments, the UUAA determination procedure indicates performing the UUAA-MM procedure when all of the foregoing criteria are met. In some other embodiments, the UUAA determination procedure may indicate performing the UUAA-MM procedure (to register UE 102 with USS/UTM 336) when at least one of the foregoing criteria is/are met. The UUAA determination procedure may conclude while the primary authentication procedure is still ongoing. Thus, when the UUAA determination procedure indicates performing the UUAA-MM procedure, AMF 310 waits until UE 102 is registered with the network slice via the NSSAA procedure before initiating the UUAA-MM procedure. This coordination is absent from other registration procedures that initiate the UUAA-MM procedure when the UUAA determination procedure indicates its performance, regardless of whether UE 102 is registered with a network slice that supports the uncrewed aerial services.

At 814, the apparatus may determine whether to perform the UUAA-MM procedure based on an outcome of the UUAA determination procedure. When the UUAA determination procedure indicates that the UUAA-MM procedure will not be determined, the operations may stop. Otherwise, when it is determined to perform the UUAA-MM procedure, the operations move to 816.

At 816, the apparatus may initiate the UUAA-MM procedure. For example, referring to FIGs. 7A and 7B, in response to the successful registration of UE 102 with a network slice that supports uncrewed aerial services via the NSSAA procedure of FIGs. 6A and 6B, AMF 310 may trigger (at 701) the initiation of a UUAA-MM procedure. Additional details of the UUAA-MM procedure are described above in connection with FIGs. 7A and 7B.

At 818, the apparatus may determine whether the UUAA-MM procedure is successful. For example, referring to FIG. 7B, AMF 310 may determine whether the UUAA-MM procedure was successful or failed based on the Nnef_Auth _Response. When UUAA-MM failure is determined, the operations may stop. Otherwise, when UUAA-MM success is determined, the operations may move to 820.

At 820, the apparatus may send USS authorization information to the user equipment. For example, referring to FIG. 7B, if UUAA-MM success is determined, AMF 310 may trigger (at 715) a user equipment configuration update procedure to deliver to UE 102 the UAV authorization information from USS/UTM 336. UE 102 may access the uncrewed aerial services by including the UAV authorization information in messages sent to USS/UTM 336 (e.g., via AMF 310).

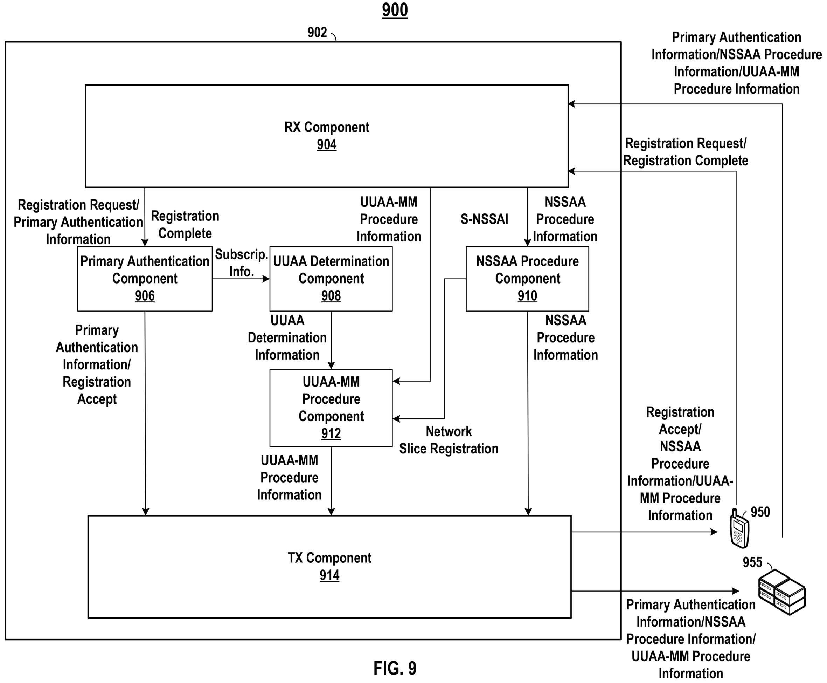

FIG. 9 is a conceptual data flow diagram 900 illustrating the data flow between different means/components in an exemplary apparatus 902. Apparatus 902 may be a first network element, e.g., such as core network element 106, node 200, AMF 310, or any other core network element or group of core network elements described herein. Apparatus 902 may include, e.g., a reception (RX) component 904, a primary authentication component 906, a UUAA determination component 908, an NSSAA procedure component 910, a UUAA-MM procedure component 912, and a transmission (TX) component 914. Apparatus 902 may be configured to communicate with a user equipment, e.g., such as UE 950. Apparatus 902 may also be configured to communicate with one or more second network element(s), e.g., such as second network element 955.

RX component 904 may be configured to receive a registration request from UE 950. The registration request may be sent to primary authentication component 906. Primary authentication component 906 may be configured to initiate and/or perform a primary authentication procedure, e.g., such as the primary authentication procedure depicted in FIGs. 5A and 5B. Primary authentication component 906 may be configured to request and/or generate primary authentication information that is sent to network entity 955 via TX component 914. In response, RX component 904 may be configured to receive primary authentication information from second network element 955. The primary authentication information received by RX component 904 may include any signaling received by new AMF 310a in FIGs. 5A and 5B. When the primary authentication information includes subscription information (e.g., uncrewed aerial subscription information), the subscription information may be sent (e.g., by one or more of RX component 904 and/or primary authentication component 906) to UUAA determination component 908. The subscription information may be obtained from a UDM entity, for example. Primary authentication information may be exchanged with UE 950 and/or second network element 955 until primary authentication component 906 determines whether UE 950 can be registered with an access network. In response to determining that UE 950 can be registered with the access network, primary authentication component 906 may generate a registration accept message that is sent to UE 950 via TX component 914. UE 950 may register with the access network by sending a registration complete message to RX component 904. The registration complete message may be sent to primary authentication component 906, which maintains access network registration information for UE 950 for the duration of the registration. Otherwise, a registration reject message may be sent to UE 950.

UUAA determination component 908 may be configured to perform a UUAA determination procedure as described above in connection with FIG. 4. For example, UUAA determination component 908 may be configured to perform the UUAA determination procedure by determining whether the aerial subscription information associated with the UE is valid. The aerial subscription information may be obtained from a UDM entity during the primary authentication procedure. In some embodiments, UUAA determination component 908 may be configured to perform the UUAA determination procedure based on various criteria. For example, UUAA determination procedure may be configured to perform the UUAA determination procedure by determining whether the UUAA determination procedure can be performed concurrently with the primary authentication procedure based on a local operator policy. In some embodiments, UUAA determination component 908 may be configured to perform the UUAA determination procedure by determining whether a UUAA result associated with a subsequent UUAA-MM procedure is still valid. In some embodiments, UUAA determination component 908 may be configured to perform the UUAA determination procedure by determining whether a registration request received from the UE includes a CAA-level UAV ID assigned to UE 950 by a USS. The UUAA determination procedure may indicate UUAA-MM procedure is performed when each of the above criteria is met or when one or more of the above criteria is met. A result (e.g., success or failure) of the UUAA determination procedure (e.g., UUAA determination information) may be sent to UUAA-MM procedure component 912. When the UUAA determination information indicates performing UUAA-MM, but before NSSAA procedure component 910 indicates UE 950 is registered with a corresponding network slice, UUAA-MM procedure component 912 waits until a signal indicating network slice registration is received from NSSAA procedure component 910.

The registration complete message may also be received by NSSAA procedure component 910 (via RX component 904 and/or primary authentication component 906). Otherwise, primary authentication component 906 indicates the successful registration of UE 950 with the access network to NSSAA procedure component. NSSAA procedure component 910 may be configured to receive network slice information, e.g., such as S-NSSAI included in the registration request by the UE 950 or otherwise received during the primary authentication procedure. In response to the successful completion of the primary authentication procedure, NSSAA procedure component 910 may be configured to initiate an NSSAA procedure to register UE 950 with a network slice associated with uncrewed aerial services. NSSAA procedure component 910 may be configured to generate NSSAA procedure information that is sent to second network entity 955 via TX component 914, for example. The NSSAA procedure information may include NSSAA signaling sent by AMF 310 in FIGs. 6A and 6B. NSSAA procedure component 910 may exchange NSSAA procedure information (e.g., which may include any signaling, requests, responses, and/or messages described above in connection with FIGs. 6A and 6B) with UE 950 and/or second network element 955 to register UE 950 with the network slice. Once UE 950 is successfully registered with a network slice that supports uncrewed aerial services, NSSAA procedure component 910 may send a signal indicating network slice registration to UUAA-MM procedure component 912.

In response to the network slice registration signal being received from NSSAA procedure component 910 and in response to the UUAA determination information indicating UUAA-MM is performed, UUAA-MM procedure component 912 may initiate the UUAA-MM procedure to register UE 950 with a USS. UUAA-MM procedure component 912 may generate and exchange UUAA-MM procedure information (e.g., which may include any signaling, requests, responses, and/or messages described above in connection with FIGs. 7A and 7B) with UE 950 and/or second network element 955 during the UUAA-MM procedure. When a successful UUAA-MM message is received from the USS, UUAA-MM procedure component 912 may initiate a user equipment configuration update procedure with UE 950. UAV authorization information generated by the USS may be communicated to UE 950 during the configuration update procedure. UE 950 may access uncrewed aerial services at the USS using the UAV authorization information.

The apparatus may include additional components that perform each of the blocks of the algorithm in the aforementioned flowchart of FIG. 8. As such, each block in the aforementioned flowchart of FIG. 8 may be performed by a component, and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

By coordinating the registration procedures (e.g., primary authentication procedure, the NSSAA procedure, and the UUAA-MM procedure) performed by primary authentication component 906, UUAA determination component 908, NSSAA procedure component 910, and UUAA-MM procedure component 912, UUAA-MM procedure failure caused by its initiation prior to the completion of the NSSAA procedure may be avoided. Moreover, using the present techniques, each of apparatus 902, UE 950, and second network element 955 may benefit from reduced power consumption and signaling overhead, as compared with other user equipments and apparatuses that do not coordinate registration procedures for access to uncrewed aerial services.

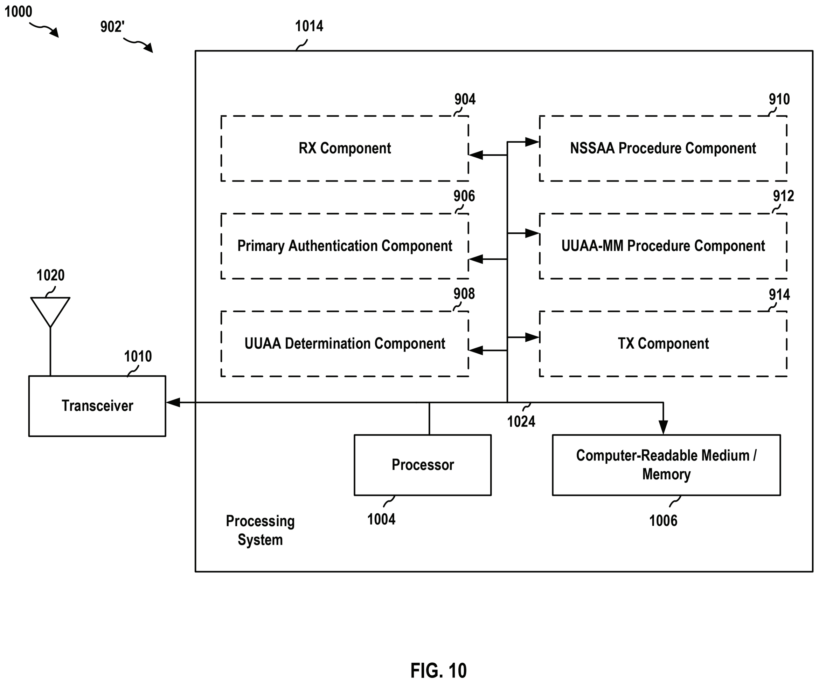

FIG. 10 is a diagram 1000 illustrating an example of a hardware implementation for an apparatus 902' employing a processing system 1014. The processing system 1014 may be implemented with a bus architecture, represented generally by the bus 1024. The bus 1024 may include any number of interconnecting buses and bridges depending on the specific application of the processing system 1014 and the overall design constraints. The bus 1024 links together various circuits including one or more processors and/or hardware components, represented by the processor 1004, the components 904, 906, 908, 910, 912, 914, and the computer-readable medium/memory 1006. The bus 1024 may also link various other circuits such as timing sources, peripherals, voltage regulators, and power management circuits, which are well known in the art, and therefore, will not be described any further.

The processing system 1014 may be coupled to a transceiver 1010. The transceiver 1010 is coupled to one or more antennas 1020. The transceiver 1010 provides a means for communicating with various other apparatus over a transmission medium. The transceiver 1010 receives a signal from the one or more antennas 1020, extracts information from the received signal, and provides the extracted information to the processing system 1014, specifically the RX component 904. In addition, the transceiver 1010 receives information from the processing system 1014, specifically the TX component 914, and based on the received information, generates a signal to be applied to the one or more antennas 1020. The processing system 1014 includes a processor 1004 coupled to a computer-readable medium / memory 1006. The processor 1004 is responsible for general processing, including the execution of software stored on the computer-readable medium/memory 1006. The software, when executed by the processor 1004, causes the processing system 1014 to perform the various functions described *supra* for any particular apparatus. The computer-readable medium/memory 1006 may also be used for storing data that is manipulated by the processor 1004 when executing software. The processing system 1014 further includes at least one of the components 904, 906, 908, 910, 912, 914. The components may be software components running in the processor 1004, resident/stored in the computer-readable medium/memory 1006, one or more hardware components coupled to the processor 1004, or some combination thereof.

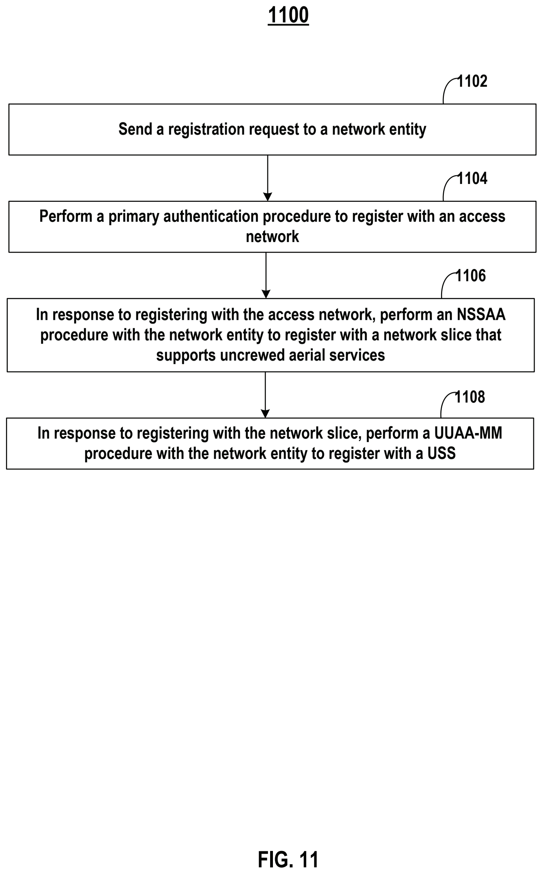

FIG. 11 illustrates a flowchart of an exemplary method 1100 of wireless communication, according to embodiments of the disclosure. Exemplary method 1100 may be performed by an apparatus for wireless communication, e.g., such as UE 102, node 200, UE 950, and/or apparatus 1202/1202'. Method 1100 may include steps 1102-1108 as described below. It is to be appreciated that some of the steps may be optional, and some of the steps may be performed simultaneously, or in a different order than shown in FIG. 11.

Referring to FIG. 11, at 1102, the apparatus may send, to a network entity, a registration request to register with an access network. In some aspects, the registration request may indicate support for an NSSAA procedure. For example, referring to FIG. 4, the exemplary coordination of registration procedure may begin when UE 102 sends (at 401) a registration request to AMF 310. The registration request may be sent when UE 102 is powered on or when it moves into a different coverage area that triggers a new registration with a different access network and/or network slice. By way of example, UE 102 (e.g., a UAV) may be flown into a new coverage area (e.g., a different public land mobile network (PLMN)) associated with a different AMF than the one originally selected. Although shown separately in FIG. 4, the registration request sent (at 401) by UE 102 to AMF 310 may be considered part of one or more of the primary authentication procedure, the NSSAA procedure, and/or the UUAA-MM procedure, in some embodiments. To that end, the registration request may include information that may be used by the set of network elements to register UE 102 with an access network (via a primary authorization procedure), a network slice that supports uncrewed aerial services (via an NSSAA procedure), and/or USS/UTM 336 (via a UUAA-MM procedure). For example, the registration request may include one or more of, e.g., access network parameters, registration type information, a GPSI, a SUCI, a GUTI, a GUAMI, a 5G-TMSI, a PEI, information associated with a requested NSSAI, a mapping of the requested NSSAI, a default configured NSSAI indication, an S-NSSAI, a CAA-level UAV ID assigned by USS/UTM 336, USS identification information (e.g., USS address), UUAA aviation payload, etc. Information such as, e.g., a requested NSSAI, CAA-level UAV ID, USS address, UUAA aviation payload, among others, may be an indication that UE 102 supports the NSSAA procedure.

At 1104, the apparatus may perform a primary authentication procedure to register with an access network. For example, referring to FIG. 4, upon receipt of the registration request, AMF 310 may initiate (at 403) a primary authentication procedure to register UE 102 with an access network. UE 102 may perform the primary authentication procedure by sending and/or receiving signalling and/or performing operations related to the user equipment and described above in connection with FIGs. 5A and 5B.

At 1106, in response to registering with the access network, the apparatus may perform an NSSAA procedure with the network entity to register with a network slice that supports uncrewed aerial services. For example, referring to FIG. 4, new AMF 310a may initiate (at 411) the NSSAA procedure to register UE 102 with a network slice that supports uncrewed aerial services. UE 102 may perform the NSSAA procedure by sending and/or receiving signalling and/or performing operations related to the user equipment and described above in connection with FIGs. 6A and 6B.

At 1108, in response to successful registration with the network slice, the apparatus may perform a UUAA-MM procedure with the network entity to register with a USS. For example, referring to FIGs. 7A and 7B, UUAA-MM procedure 700 depicted in FIGs. 7A and 7B may correspond to the UUAA-MM procedure shown (at 413) in FIG. 4, for example. Moreover, UUAA-MM procedure 700 may be performed to register UE 102 (e.g., UAV) with USS/UTM 336. USS/UTM 336 may maintain uncrewed aerial services, which may be accessed once UE 102 is registered therewith. UUAA-MM procedure 700 may be implemented by, e.g., UE 102, AMF 310, UAS-NF/NEF 322, and/or USS/UTM 336. AMF 310 may initiate the UUAA-MM procedure 700 once UE 102 is registered with a network slice that supports uncrewed aerial services via the NSSAA procedure 600 described in FIGs. 6A and 6B. UE 102 may perform the UUAA-MM procedure by sending and/or receiving signalling and/or performing operations related to the user equipment and described above in connection with FIGs. 7A and 7B.

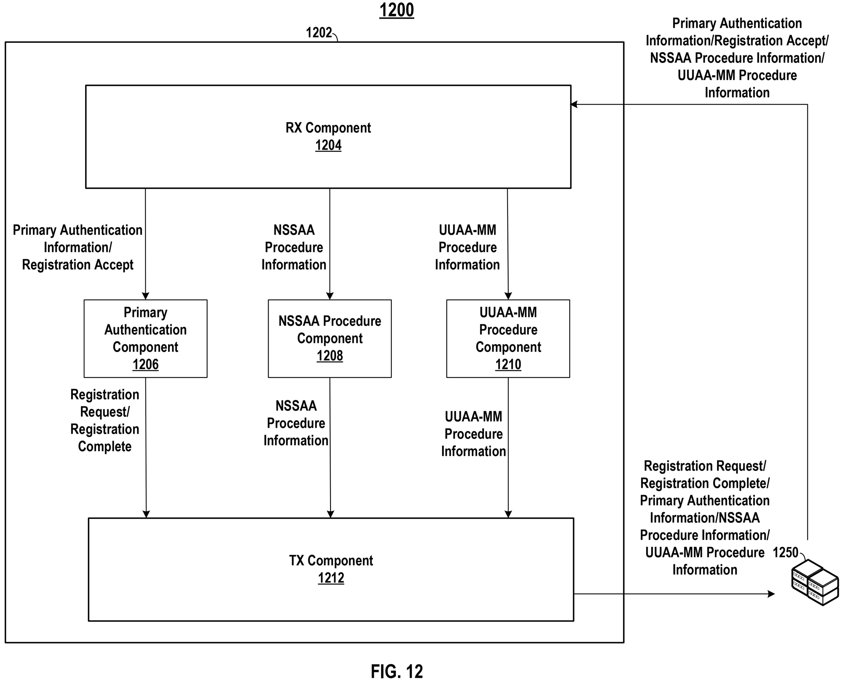

FIG. 12 is a conceptual data flow diagram 1200 illustrating the data flow between different means/components in an exemplary apparatus 1202 (referred to hereinafter as "apparatus 1202"). Apparatus 1202 may be a user equipment, e.g., such as UE 102, 950, node 200, apparatus 1202'. Apparatus 1202 may be configured to communicate with a network element 1250, e.g., such as AMF 310, new AMF 310a, old AMF 310b, etc. Apparatus 1202 may communicate with network element 1250 via an access node (not shown), for example. Apparatus 1202 may include, e.g., an RX component 1204, an NSSAA procedure component 1208, a UUAA-MM procedure component 1210, and/or a TX component 1212.

Primary authentication component 1206 may be configured to generate a registration request to register with an access network. The registration request may indicate support for NSSAA. The registration request may be sent to network element 1250 via TX component 1212, for example. RX component 1204 may be configured to receive primary authentication information from network element 1250. RX component 1204 may be configured to send the primary authentication information to primary authentication component 1206, which processes the information. Primary authentication component 1206 may be configured to generate primary authentication information that is sent to network element 1250 during the primary authentication procedure, as shown in FIGs. 5A and 5B. Network element 1250 may send a registration accept message to primary authentication component 1206 in response to apparatus 1202 being registered with the access network. To acknowledge the registration, primary authentication component 1206 may generate a registration complete message that is sent to network element 1250 via TX component 1212.

Network element 1250 may send NSSAA procedure information to NSSAA procedure component 1208 once apparatus 1202 is registered with the access network. NSSAA procedure component 1208 may generate and respond with NSSAA procedure information that is sent to network element 1250 via TX component 1212. The NSSAA procedure information received and/or sent by NSSAA procedure component 1208 may correspond to the signaling depicted in FIGs. 6A and 6B. The NSSAA procedure may register apparatus 1202 with a network slice that supports uncrewed aerial services. In response to successful registration with the network slice, UUAA-MM procedure component 1210 may perform a UUAA-MM procedure with network element 1250 to register apparatus 1202 with a USS that maintains uncrewed aerial services for which the user of apparatus 1202 subscribes. The UUAA-MM procedure information may correspond to the signaling depicted in FIGs. 7A and 7B. Once registered with the USS, UUAA-MM procedure component 1210 may receive UAV authorization information that enables apparatus 1202 to access the uncrewed aerial services.

The apparatus may include additional components that perform each of the blocks of the algorithm in the aforementioned flowcharts of FIG. 11. As such, each block in the aforementioned flowcharts of FIG. 11 may be performed by a component, and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

By performing registration procedures (e.g., primary authentication procedure, the NSSAA procedure, and the UUAA-MM procedure) coordinated by network element 1250, UUAA-MM procedure failure caused by its initiation prior to the completion of the NSSAA procedure may be avoided. Moreover, using the present techniques, each of apparatus 1202 and network element 1250 may benefit from reduced power consumption and signaling overhead, as compared with other apparatuses and network elements that do not coordinate registration procedures for access to uncrewed aerial services.

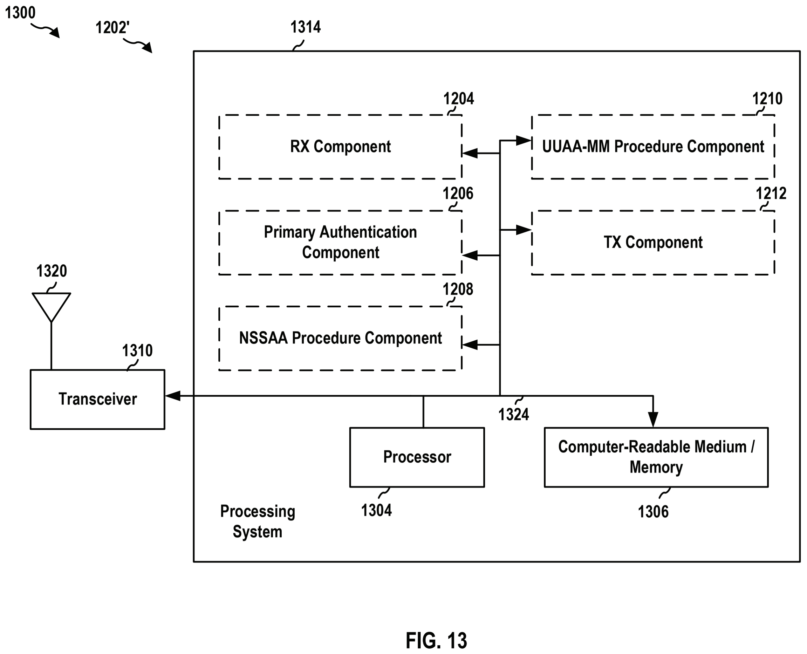

FIG. 13 is a diagram 1300 illustrating an example of a hardware implementation for an apparatus 1202' employing a processing system 1314. The processing system 1314 may be implemented with a bus architecture, represented generally by the bus 1324. The bus 1324 may include any number of interconnecting buses and bridges depending on the specific application of the processing system 1314 and the overall design constraints. The bus 1324 links together various circuits including one or more processors and/or hardware components, represented by the processor 1304, the components 1204, 1206, 1208, 1210, 1212 and the computer-readable medium/memory 1306. The bus 1324 may also link various other circuits such as timing sources, peripherals, voltage regulators, and power management circuits, which are well known in the art, and therefore, will not be described any further.

The processing system 1314 may be coupled to a transceiver 1310. The transceiver 1310 is coupled to one or more antennas 1320. The transceiver 1310 provides a means for communicating with various other apparatus over a transmission medium. The transceiver 1310 receives a signal from the one or more antennas 1320, extracts information from the received signal, and provides the extracted information to the processing system 1314, specifically the RX component 1204. In addition, the transceiver 1310 receives information from the processing system 1314, specifically the TX component 1212, and based on the received information, generates a signal to be applied to the one or more antennas 1320. The processing system 1314 includes a processor 1304 coupled to a computer-readable medium / memory 1306. The processor 1304 is responsible for general processing, including the execution of software stored on the computer-readable medium/memory 1306. The software, when executed by the processor 1304, causes the processing system 1314 to perform the various functions described *supra* for any particular apparatus. The computer-readable medium / memory 1306 may also be used for storing data that is manipulated by the processor 1304 when executing software. The processing system 1314 further includes at least one of the components 1204, 1206, 1208, 1210, 1212. The components may be software components running in the processor 1304, resident/stored in the computer-readable medium/memory 1306, one or more hardware components coupled to the processor 1304, or some combination thereof.

In various aspects of the present disclosure, the functions described herein may be implemented in hardware, software, firmware, or any combination thereof. If implemented in software, the functions may be stored on or encoded as instructions or code on a non-transitory computer-readable medium. Computer-readable media includes computer storage media. Storage media may be any available media that can be accessed by a computing device, such as node 200 in FIG. 2. By way of example, and not limitation, such computer-readable media can include RAM, ROM, EEPROM, CD-ROM or other optical disk storage, HDD, such as magnetic disk storage or other magnetic storage devices, Flash drive, SSD, or any other medium that can be used to carry or store desired program code in the form of instructions or data structures and that can be accessed by a processing system, such as a mobile device or a computer. Disk and disc, as used herein, includes CD, laser disc, optical disc, digital video disc (DVD), and floppy disk where disks usually reproduce data magnetically, while discs reproduce data optically with lasers. Combinations of the above should also be included within the scope of computer-readable media.

According to one aspect of the present disclosure, a method of wireless communication of a network element is provided. The method may include initiating an NSSAA procedure to register a UE with a network slice associated with uncrewed aerial services. In response to successful registration of the UE with the network slice by the NSSAA procedure, the method may include initiating a UUAA-MM procedure to register the UE with a USS associated with the network slice. In some embodiments, the USS may maintain the uncrewed aerial services.

In some embodiments, the method may include receiving, from the UE, a registration request to register with an access network, the registration request indicating support for the NSSAA procedure. In some embodiments, the method may include initiating the primary authentication procedure to register the UE with the access network based on the registration request. In some embodiments, the NSSAA procedure may be initiated in response to the registration request indicating support for the NSSAA procedure. In some embodiments, the registration request may include one or more of S-NSSAI associated with the network slice or a CAA-level UAV ID assigned to the UE by the USS.

In some embodiments, the method may include obtaining aerial subscription information associated with the UE during the primary authentication procedure. In some embodiments, the method may include determining whether to perform the UUAA-MM procedure based on a UUAA determination procedure performed during the primary authentication procedure.

In some embodiments, the UUAA determination procedure may include determining whether the aerial subscription information associated with the UE is valid. In some embodiments, the aerial subscription information may be obtained from a UDM entity during the primary authentication procedure. In some embodiments, the UUAA determination procedure may include determining whether the UUAA determination procedure can be performed concurrently with a primary authentication procedure based on a local operator policy. In some embodiments, the UUAA determination procedure may include determining whether a registration request received from the UE includes a CAA-level UAV ID assigned to the UE by the USS.

In some embodiments, the UUAA determination procedure may indicate performing the UUAA-MM procedure when the registration request includes valid aerial subscription information, the UUAA determination procedure can be performed concurrent with the primary authentication procedure based on the local operator policy, the registration request includes the CAA-level UAV ID assigned to the UE by the USS, or any combination thereof.

In some embodiments, the UUAA determination procedure may be performed prior to the NSSAA procedure.

In some embodiments, in response to determining to perform the UUAA-MM procedure by the UUAA determination procedure, the method may include sending a registration accept message that includes a pending UUAA-MM indication to the UE. In some embodiments, the method may include receiving a registration complete message from the UE after sending the registration accept message.

In some embodiments, the method may include maintaining a UUAA result associated with the UE and the UUAA-MM procedure. In some embodiments, in response to the UE being successfully registered with the USS by the UUAA-MM procedure, the method may include initiating a UE configuration update procedure. In some embodiments, the method may include sending a registration accept message that includes USS authorization information to the UE based on the UE configuration update procedure.

In some embodiments, the network element may communicate with the USS via a UAS-NF during the UUAA-MM procedure.

In some embodiments, the UE may include a UAV. In some embodiments, the network element may include an AMF.

According to another aspect of the present disclosure, an apparatus for wireless communication of a network element is provided. The apparatus may include a memory and at least one processor coupled to the memory. The at least one processor may be configured to initiate an NSSAA procedure to register a UE with a network slice associated with uncrewed aerial services. In response to successful registration of the UE with the network slice by the NSSAA procedure, the at least one processor may be configured to initiate a UUAA-MM procedure to register the UE with a USS associated with the network slice. In some embodiments, the USS may maintain the uncrewed aerial services.

In some embodiments, the at least one processor may be configured to receive, from the UE, a registration request to register with an access network, the registration request indicating support for the NSSAA procedure. In some embodiments, the at least one processor may be configured to initiate the primary authentication procedure to register the UE with the access network based on the registration request. In some embodiments, the NSSAA procedure may be initiated in response to the registration request indicating support for the NSSAA procedure. In some embodiments, the registration request may include one or more of an S-NSSAI associated with the network slice or a CAA-level UAV ID assigned to the UE by the USS.

In some embodiments, the at least one processor may be further configured to obtain aerial subscription information associated with the UE during the primary authentication procedure. In some embodiments, the at least one processor may be further configured to determine whether to perform the UUAA-MM procedure based on a UUAA determination procedure performed during the primary authentication procedure.

In some embodiments, the at least one processor may be configured to perform the UUAA determination procedure by determining whether the aerial subscription information associated with the UE is valid. In some embodiments, the aerial subscription information may be obtained from a UDM entity during the primary authentication procedure. In some embodiments, the at least one processor may be configured to perform the UUAA determination procedure by determining whether the UUAA determination procedure can be performed concurrently with a primary authentication procedure based on a local operator policy. In some embodiments, the at least one processor may be configured to perform the UUAA determination procedure by determining whether a registration request received from the UE includes a CAA-level UAV ID assigned to the UE by the USS.

In some embodiments, the at least one processor is configured to determine to perform the UUAA-MM procedure when the registration request includes valid aerial subscription information, the UUAA determination procedure can be performed concurrent with the primary authentication procedure based on the local operator policy, the registration request includes the CAA-level UAV ID assigned to the UE by the USS, or any combination thereof.

In some embodiments, the at least one processor may be configured to perform the UUAA determination procedure prior to the NSSAA procedure.

In some embodiments, in response to determining to perform the UUAA-MM procedure by the UUAA determination procedure, the at least one processor may be further configured to send a registration accept message that includes a pending UUAA-MM indication to the UE. In some embodiments, the at least one processor may be further configured to receive a registration complete message from the UE after sending the registration accept message.

In some embodiments, the at least one processor may be further configured to maintain a UUAA result associated with the UE and the UUAA-MM procedure. In some embodiments, in response to the UE being successfully registered with the USS by the UUAA-MM procedure, the at least one processor may be further configured to initiate a UE configuration update procedure. In some embodiments, the at least one processor may be further configured to send a registration accept message that includes USS authorization information to the UE based on the UE configuration update procedure.

In some embodiments, the UE may include a UAV. In some embodiments, the network element may include an AMF.

According to still another aspect of the present disclosure, a non-transitory computer-readable medium encoding instructions that, when executed by at least one processor, perform a process for wireless communication of a network element, is provided. The process may include initiating an NSSAA procedure to register a UE with a network slice associated with uncrewed aerial services. In response to successful registration of the UE with the network slice by the NSSAA procedure, the process may include initiating a UUAA-MM procedure to register the UE with a USS associated with the network slice.

According to yet another aspect of the present disclosure, a method of wireless communication of a UE is provided. The method may include sending, to a network element, a registration request to register with an access network. The registration request may indicate support for an NSSAA procedure. The method may include performing a primary authentication procedure to register with the access network. In response to successful registration with the access network by the primary authentication procedure, the method may include performing the NSSAA procedure to register with a network slice that supports uncrewed aerial services. In response to registering with the network slice by the NSSAA procedure, the method may include performing a UUAA-MM procedure to register with a USS associated with the network slice.

According to a further aspect of the present disclosure, an apparatus for wireless communication of a UE is provided. The apparatus may include a memory and at least one processor coupled to the memory. The at least one processor may be configured to send, to a network element, a registration request to register with an access network, the registration request indicating support for an NSSAA procedure. The at least one processor may be configured to perform a primary authentication procedure to register with the access network. In response to successful registration with the access network by the primary authentication procedure, the at least one processor may be configured to perform the NSSAA procedure to register with a network slice that supports uncrewed aerial services. In response to registering with the network slice by the NSSAA procedure, the at least one processor may be configured to perform a UUAA-MM procedure to register with a USS associated with the network slice.

According to yet a further aspect of the present disclosure, a non-transitory computer-readable medium encoding instructions that, when executed by at least one processor, perform a process for wireless communication of a UE. The process may include sending, to a network element, a registration request to register with an access network. The registration request indicating support for an NSSAA procedure. The process may include performing a primary authentication procedure to register with the access network. In response to registering with the access network by the primary authentication procedure, the process may include performing the NSSAA procedure to register with a network slice that supports uncrewed aerial services. In response to successful registration with the network slice by the NSSAA procedure, the process may include performing a UUAA-MM procedure to register with a USS associated with the network slice.

The foregoing description of the embodiments will so reveal the general nature of the present disclosure that others can, by applying knowledge within the skill of the art, readily modify and/or adapt for various applications such embodiments, without undue experimentation, without departing from the general concept of the present disclosure. Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

Embodiments of the present disclosure have been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

The Summary and Abstract sections may set forth one or more but not all exemplary embodiments of the present disclosure as contemplated by the inventor(s), and thus, are not intended to limit the present disclosure and the appended claims in any way.

Various functional blocks, modules, and steps are disclosed above. The arrangements provided are illustrative and without limitation. Accordingly, the functional blocks, modules, and steps may be reordered or combined in different ways than in the examples provided above. Likewise, some embodiments include only a subset of the functional blocks, modules, and steps, and any such subset is permitted.

The breadth and scope of the present disclosure should not be limited by any of the above-described exemplary embodiments, but should be defined only in accordance with the following claims and their equivalents.

The following numbered clauses, describing aspects of the disclosure, are part of the description.
1. A method of wireless communication of a network element, comprising:
   initiating a network slice specific authentication and authorization (NSSAA) procedure to register a user equipment (UE) with a network slice associated with uncrewed aerial services; and
   in response to successful registration of the UE with the network slice by the NSSAA procedure, initiating an uncrewed aerial system (UAS) service supplier (USS) uncrewed aerial vehicle (UAV) authentication and authorization (UUAA) mobility management (UUAA-MM) procedure to register the UE with a USS associated with the network slice, the USS maintaining the uncrewed aerial services.
2. The method of clause 1, further comprising:
   receiving, from the UE, a registration request to register with an access network, the registration request indicating support for the NSSAA procedure; and
   initiating a primary authentication procedure to register the UE with the access network based on the registration request,
      wherein the NSSAA procedure is initiated in response to the registration request indicating support for the NSSAA procedure, and
      wherein the registration request comprises one or more of single network slice selection assistance information (S-NSSAI) associated with the network slice or a civil aviation administration (CAA)-level UAV identification (ID) assigned to the UE by the USS.
3. The method of clause 2, further comprising:
   obtaining aerial subscription information associated with the UE during the primary authentication procedure; and
   determining whether to perform the UUAA-MM procedure based on a UUAA determination procedure performed during the primary authentication procedure.
4. The method of clause 3, wherein the UUAA determination procedure comprises one or more of:
   determining whether the aerial subscription information associated with the UE is valid, the aerial subscription information being obtained from a user data management (UDM) entity during the primary authentication procedure;
   determining whether the UUAA determination procedure can be performed concurrently with a primary authentication procedure based on a local operator policy; or
   determining whether a registration request received from the UE includes a civil aviation administration (CAA)-level UAV identification (ID) assigned to the UE by the USS.
5. The method of clause 4, wherein the UUAA determination procedure indicates performing the UUAA-MM procedure when the registration request includes valid aerial subscription information, the UUAA determination procedure can be performed concurrently with the primary authentication procedure based on the local operator policy, the registration request includes the CAA-level UAV ID assigned to the UE by the USS, or any combination thereof.
6. The method of clause 3, wherein the UUAA determination procedure is performed prior to the NSSAA procedure.
7. The method of clause 3, further comprising:
   in response to determining to perform the UUAA-MM procedure by the UUAA determination procedure, sending a registration accept message that includes a pending UUAA-MM indication to the UE; and
   receiving a registration complete message from the UE after sending the registration accept message.
8. The method of clause 1, further comprising:
   maintaining a UUAA result associated with the UE and the UUAA-MM procedure; and
   in response to the UE being successfully registered with the USS by the UUAA-MM procedure, initiating a UE configuration update procedure; and
   sending a registration accept message that includes USS authorization information to the UE based on the UE configuration update procedure.
9. The method of clause 1, wherein the network element communicates with the USS via a UAS-network function (UAS-NF) during the UUAA-MM procedure.
10. The method of clause 1, wherein:
   the UE comprises a UAV, and
   the network element comprises an access and mobility management function (AMF).
11. An apparatus for wireless communication of a network element, comprising:
   a memory; and
   at least one processor coupled to the memory and configured to:
      initiate a network slice specific authentication and authorization (NSSAA) procedure to register a user equipment (UE) with a network slice associated with uncrewed aerial services; and
      in response to successful registration of the UE with the network slice by the NSSAA procedure, initiate an uncrewed aerial system (UAS) service supplier (USS) uncrewed aerial vehicle (UAV) authentication and authorization (UUAA) mobility management (UUAA-MM) procedure to register the UE with a USS associated with the network slice, the USS maintaining the uncrewed aerial services.
12. The apparatus of clause 11, wherein the at least one processor is further configured to:
   receive, from the UE, a registration request to register with an access network, the registration request indicating support for the NSSAA procedure; and
   initiate a primary authentication procedure to register the UE with the access network based on the registration request,
      wherein the NSSAA procedure is initiated in response to the registration request indicating support for the NSSAA procedure, and
      wherein the registration request comprises one or more of single network slice selection assistance information (S-NSSAI) associated with the network slice or a civil aviation administration (CAA)-level UAV identification (ID) assigned to the UE by the USS.
13. The apparatus of clause 12, wherein the at least one processor is further configured to:
   obtain aerial subscription information associated with the UE during the primary authentication procedure; and
   determine whether to perform the UUAA-MM procedure based on a UUAA determination procedure performed during the primary authentication procedure.
14. The apparatus of clause 13, wherein the at least one processor is configured to perform the UUAA determination procedure by one or more of:
   determining whether the aerial subscription information associated with the UE is valid, the aerial subscription information being obtained from a user data management (UDM) entity during the primary authentication procedure;
   determining whether the UUAA determination procedure can be performed concurrently with a primary authentication procedure based on a local operator policy;
      or
   determining whether a registration request received from the UE includes a civil aviation administration (CAA)-level UAV identification (ID) assigned to the UE by the USS.
15. The apparatus of clause 14, wherein the at least one processor is configured to determine to perform the UUAA-MM procedure when the registration request includes valid aerial subscription information, the UUAA determination procedure can be performed concurrent with the primary authentication procedure based on the local operator policy, the registration request includes the CAA-level UAV ID assigned to the UE by the USS, or any combination thereof.
16. The apparatus of clause 13, wherein the at least one processor is configured to perform the UUAA determination procedure prior to the NSSAA procedure.
17. The apparatus of clause 13, wherein the at least one processor is further configured to:
   in response to determining to perform the UUAA-MM procedure by the UUAA determination procedure, send a registration accept message that includes a pending UUAA-MM indication to the UE; and
   receive a registration complete message from the UE after sending the registration accept message.
18. The apparatus of clause 11, wherein the at least one processor is further configured to:
   maintain a UUAA result associated with the UE and the UUAA-MM procedure; and
   in response to the UE being successfully registered with the USS by the UUAA-MM procedure, initiate a UE configuration update procedure; and
   send a registration accept message that includes USS authorization information to the UE based on the UE configuration update procedure.
19. The apparatus of clause 11, wherein:
   the UE comprises a UAV, and
   the network element comprises an access and mobility management function (AMF).
20. A non-transitory computer-readable medium encoding instructions that, when executed by at least one processor, perform a process for wireless communication of a network element, the process comprising:
   initiating a network slice specific authentication and authorization (NSSAA) procedure to register a user equipment (UE) with a network slice associated with uncrewed aerial services; and
   in response to successful registration of the UE with the network slice by the NSSAA procedure, initiating an uncrewed aerial system (UAS) service supplier (USS) uncrewed aerial vehicle (UAV) authentication and authorization (UUAA) mobility management (UUAA-MM) procedure to register the UE with a USS associated with the network slice.
21. A method of wireless communication of a user equipment (UE), comprising:
   sending, to a network element, a registration request to register with an access network, the registration request indicating support for a network slice specific authentication and authorization (NSSAA) procedure;
   performing a primary authentication procedure to register with the access network;
   in response to successful registration with the access network by the primary authentication procedure, performing the NSSAA procedure to register with a network slice that supports uncrewed aerial services; and
   in response to successful registration with the network slice by the NSSAA procedure, performing an uncrewed aerial system (UAS) service supplier (USS) uncrewed aerial vehicle (UAV) authentication and authorization (UUAA) mobility management (UUAA-MM) procedure to register with a USS associated with the network slice.
22. An apparatus for wireless communication of a user equipment (UE), comprising:
   a memory; and
   at least one processor coupled to the memory and configured to:
      send, to a network element, a registration request to register with an access network, the registration request indicating support for a network slice specific authentication and authorization (NSSAA) procedure;
      perform a primary authentication procedure to register with the access network;
      in response to successful registration with the access network by the primary authentication procedure, perform the NSSAA procedure to register with a network slice that supports uncrewed aerial services; and
      in response to successful registration with the network slice by the NSSAA procedure, perform an uncrewed aerial system (UAS) service supplier (USS) uncrewed aerial vehicle (UAV) authentication and authorization (UUAA) mobility management (UUAA-MM) procedure to register with a USS associated with the network slice.
23. A non-transitory computer-readable medium encoding instructions that, when executed by at least one processor, perform a process for wireless communication of a user equipment (UE), the process comprising:
   sending, to a network element, a registration request to register with an access network, the registration request indicating support for a network slice specific authentication and authorization (NSSAA) procedure;
   performing a primary authentication procedure to register with the access network;
   in response to successful registration with the access network by the primary authentication procedure, performing the NSSAA procedure to register with a network slice that supports uncrewed aerial services; and
   in response to successful registration with the network slice by the NSSAA procedure, performing an uncrewed aerial system (UAS) service supplier (USS) uncrewed aerial vehicle (UAV) authentication and authorization (UUAA) mobility management (UUAA-MM) procedure to register with a USS associated with the network slice.

## Claims

1. A method of wireless communication of a network element, comprising:
initiating a network slice specific authentication and authorization (NSSAA) procedure to register a user equipment (UE) with a network slice associated with uncrewed aerial services; and
in response to successful registration of the UE with the network slice by the NSSAA procedure, initiating an uncrewed aerial system (UAS) service supplier (USS) uncrewed aerial vehicle (UAV) authentication and authorization (UUAA) mobility management (UUAA-MM) procedure to register the UE with a USS associated with the network slice;
wherein a UUAA determination procedure is performed prior to the NSSAA procedure.

2. The method of claim 1, further comprising:
receiving, from the UE, a registration request to register with an access network, the registration request indicating support for the NSSAA procedure; and
initiating a primary authentication procedure to register the UE with the access network based on the registration request,
wherein the NSSAA procedure is initiated in response to the registration request indicating support for the NSSAA procedure, and
wherein the registration request comprises one or more of single network slice selection assistance information (S-NSSAI) associated with the network slice or a civil aviation administration (CAA)-level UAV identification (ID) assigned to the UE by the USS.

3. The method of claim 2, further comprising:
when the registration request indicates support for NSSAA, initiating the NSSAA procedure concurrent with the primary authentication procedure or after the UE is registered with the access network.

4. The method of any one of claims 1-3, wherein the UUAA determination procedure indicates performing the UUAA-MM procedure based on one or more of the following criteria:
uncrewed aerial subscription data for the UE is valid;
local operator policy indicates the UUAA determination procedure is performed during the primary authentication procedure;
there is no valid UUAA result from a previous UUAA-MM procedure; and/or
CAA-level UAV ID is provided in an initial registration request.

5. The method of any one of claims 2-4, further comprising:
in response to determining to perform the UUAA-MM procedure by the UUAA determination procedure, sending a registration accept message that includes a pending UUAA-MM indication to the UE; and
receiving a registration complete message from the UE after sending the registration accept message.

6. The method of any one of claims 1-5, further comprising:
maintaining a UUAA result associated with the UE and the UUAA-MM procedure; and
in response to the UE being successfully registered with the USS by the UUAA-MM procedure, initiating a UE configuration update procedure.

7. The method of any one of claims 1-6, wherein the network element communicates with the USS via a UAS-network function (UAS-NF) during the UUAA-MM procedure.

8. The method of any one of claims 1-7, wherein:
the UE comprises a UAV, and
the network element comprises an access and mobility management function (AMF).

9. An apparatus configured to perform the method of any one of claims 1-8.

10. A method of wireless communication of a user equipment (UE), comprising:
sending, to a network element, a registration request to register with an access network, the registration request indicating support for a network slice specific authentication and authorization (NSSAA) procedure;
performing a primary authentication procedure to register with the access network;
in response to successful registration with the access network by the primary authentication procedure, performing the NSSAA procedure to register with a network slice that supports uncrewed aerial services; and
in response to successful registration with the network slice by the NSSAA procedure, performing an uncrewed aerial system (UAS) service supplier (USS) uncrewed aerial vehicle (UAV) authentication and authorization (UUAA) mobility management (UUAA-MM) procedure to register with a USS associated with the network slice;
wherein a UUAA determination procedure is performed prior to the NSSAA procedure.

11. The method of claim 10, wherein the registration request indicates support for NSSAA.

12. The method of claim 10 or 11, wherein the registration request comprises one or more of single network slice selection assistance information (S-NSSAI) associated with the network slice or a civil aviation administration (CAA)-level UAV identification (ID) assigned to the UE by the USS.

13. The method of any one of claims 10-12, further comprising:
receiving a registration accept message that includes a pending UUAA-MM indication from the network element; and
sending a registration complete message to the network element after receiving the registration accept message.

14. The method of any one of claims 10-13, wherein:
the UE comprises a UAV, and
the network element comprises an access and mobility management function (AMF).

15. An apparatus configured to perform the method of any one of claims 10-14.
